(19) Europäisches Patentamt / European Patent Office / Office européen des brevets

(11) **EP 4 529 167 A1**

(12) **EUROPEAN PATENT APPLICATION**
published in accordance with Art. 153(4) EPC

(43) Date of publication:
26.03.2025 Bulletin 2025/13

(21) Application number: 23826304.0

(22) Date of filing: 16.06.2023

(51) International Patent Classification (IPC):
*H04N 19/20* (2014.01)

(52) Cooperative Patent Classification (CPC):
H04N 19/20; H04N 19/44

(86) International application number:
PCT/CN2023/100783

(87) International publication number:
WO 2023/246655 (28.12.2023 Gazette 2023/52)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(30) Priority: 20.06.2022 CN 202210699545

(71) Applicant: Huawei Technologies Co., Ltd.
Shenzhen, Guangdong 518129 (CN)

(72) Inventors:
• GUO, Tiansheng
Shenzhen, Guangdong 518129 (CN)

• CHEN, Zhe
Shenzhen, Guangdong 518129 (CN)
• LI, Meng
Shenzhen, Guangdong 518129 (CN)
• CHEN, Jingping
Shenzhen, Guangdong 518129 (CN)
• WANG, Jing
Shenzhen, Guangdong 518129 (CN)

(74) Representative: Eisenführ Speiser
Patentanwälte Rechtsanwälte PartGmbB
Johannes-Brahms-Platz 1
20355 Hamburg (DE)

(54) **IMAGE ENCODING METHOD AND APPARATUS, AND IMAGE DECODING METHOD AND APPARATUS**

(57) This application relates to the field of picture compression technologies, and in particular, to a picture encoding method and apparatus and a picture decoding method and apparatus. The picture decoding method includes: obtaining a side information bitstream of a to-be-decoded picture (1301); and obtaining a picture side information feature based on the side information bitstream (1302), and obtaining a preview picture based on the picture side information feature (1303). The picture side information feature is a second picture feature set obtained by performing, based on a hyperprior encoding neural network, feature extraction on a first picture feature set corresponding to the to-be-decoded picture. Based on the foregoing decoding solution, a decoder side may quickly obtain the preview picture based on the side information bitstream. This effectively avoids a case in which a preview picture cannot be obtained in a timely manner when a user browses a picture in the conventional technology.

FIG. 13

## Description

This application claims priority to Chinese Patent Application No. 202210699545.0, filed with the China National Intellectual Property Administration on June 20, 2022 and entitled "PICTURE ENCODING METHOD AND APPARATUS, AND PICTURE DECODING METHOD AND APPARATUS", which is incorporated herein by reference in its entirety.

## TECHNICAL FIELD

This application relates to the field of picture compression technologies, and in particular, to a picture encoding method and apparatus and a picture decoding method and apparatus.

## BACKGROUND

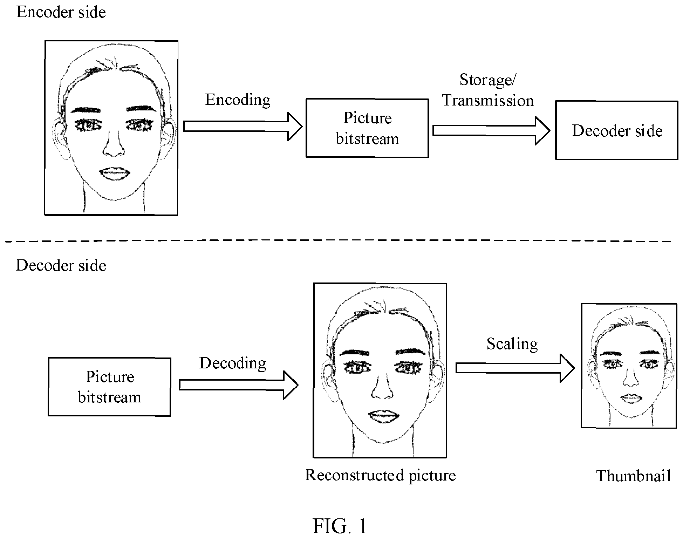

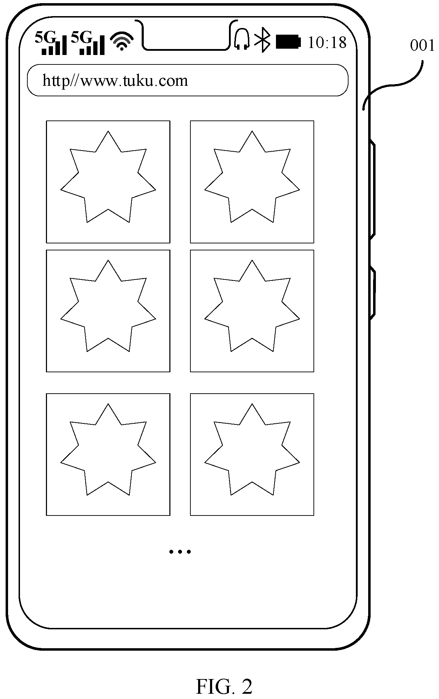

A picture compression technology is a technology that uses picture data features such as spatial redundancy, visual redundancy, and statistical redundancy to represent picture information in a lossy or lossless manner with as few bits as possible. The picture compression technology can implement effective transmission and storage of the picture information. Currently, a commonly used picture compression technology is a picture coding technology. Specifically, as shown in FIG. 1, a picture is encoded into a corresponding bitstream in an encoding manner on an encoder side, to store the bitstream or transmit the bitstream to a decoder side. When the picture needs to be displayed, the decoder side receives the bitstream and decodes the bitstream to obtain the original picture, and performs scaling on the original picture to obtain a thumbnail with low resolution for preview. As shown in FIG. 2, in an application scenario in which a picture is browsed on an electronic device 001 by using a web application, or in an application scenario such as a video player or an album, a decoder side like the web application performs complete decoding on a stored or received bitstream to obtain a picture with original resolution, and then converts the picture with the original resolution into a preview picture with low resolution through picture scaling, to facilitate previewing by a user. After selecting a picture to be viewed, the user may view, by performing an operation like tapping a thumbnail, a reconstructed picture corresponding to the original picture.

However, in the foregoing decompression process, regardless of a size of a thumbnail required by an application, the picture with the original resolution needs to be first obtained through decoding. In this solution, the electronic device has a high requirement for a computing capability. When the computing capability of the electronic device is insufficient, a thumbnail interface may not be refreshed in a timely manner, and the user may feel obvious frame freezing. For example, when the user slides to browse a picture by using the web application, a thumbnail interface may not be refreshed in a timely manner, and the user may feel obvious frame freezing.

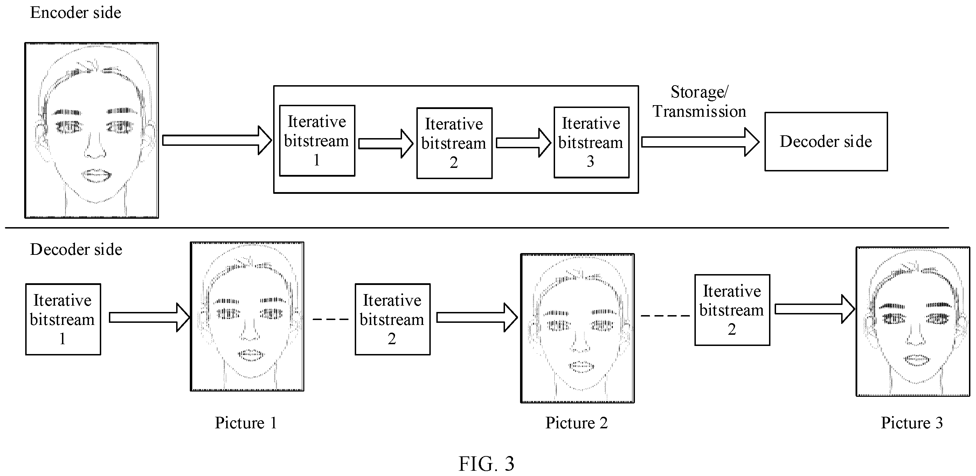

In some coding solutions in the conventional technology, a picture coding solution based on a recurrent neural network is used. Specifically, as shown in FIG. 3, after each iteration, an encoder side forms an iterative bitstream and reconstruction error data for a next iteration. For example, bitstreams obtained through three iterations shown in FIG. 3 are an iterative bitstream 1, an iterative bitstream 2, and an iterative bitstream 3. After receiving these bitstreams, a decoder side successively decodes each bitstream to obtain a basic reconstructed picture and a residual picture for use for a next reconstructed picture. In this way, quality of the reconstructed picture is gradually enhanced. However, in the foregoing solution, computing complexity of a plurality of iterations is high, and each time of decoding is performed based on each bitstream, resulting in poor scalability.

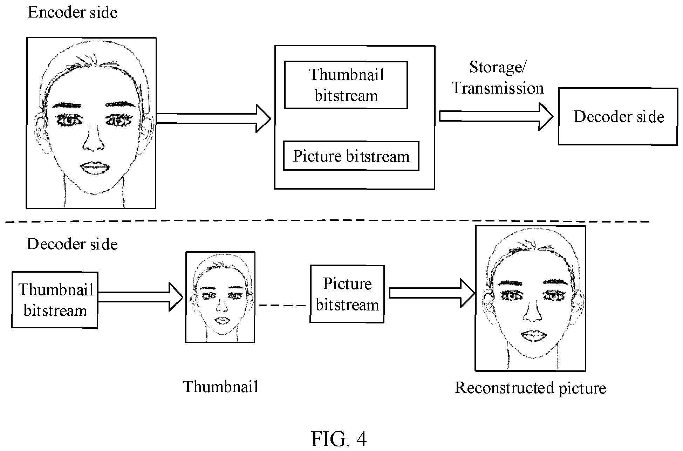

In some other coding solutions, a solution in which a thumbnail is additionally encoded and transmitted is used. Specifically, as shown in FIG. 4, to additionally obtain a bitstream of a thumbnail on an encoder side by using a solution like compression, the bitstream of the thumbnail and an entire-picture bitstream corresponding to a regular picture are combined for transmission, and the bitstream of the thumbnail is preferentially decoded on a decoder side for preview. However, in this solution, a size of an overall bitstream file is increased, a compression rate is reduced, and only a thumbnail having same quality as the thumbnail compressed on the encoder side can be obtained during decoding.

## SUMMARY

To resolve a problem that an encoding solution has high computing complexity, decoding scalability is poor, and only a decoded picture with specified quality can be obtained in the conventional technology, embodiments of this application provide a picture encoding method and apparatus and a picture decoding method and apparatus.

According to a first aspect, an embodiment of this application provides a picture decoding method, including: obtaining a side information bitstream of a to-be-decoded picture; obtaining a picture side information feature based on the side information bitstream, where the picture side information feature is a second picture feature set obtained by performing, based on a hyperprior encoding neural network, feature extraction on a first picture feature set corresponding to the to-be-decoded picture, a data volume of the second picture feature set is less than a data volume of the first picture feature set, the hyperprior encoding neural network is obtained through training constraint based on a bit rate loss, a reconstructed picture distortion loss, and a preview picture distortion loss, and the preview picture distortion loss represents a similarity difference between an original training picture and a preview picture of the original training picture; and obtaining a preview picture of the to-be-decoded picture based on the picture side information feature.

Based on the foregoing decoding solution, a decoder side may quickly obtain the preview picture based on the side information bitstream with a small data volume. In this way, during decoding, there is no need to obtain a thumbnail with low resolution through scaling after an original picture is obtained, thereby reducing a computing power requirement on an electronic device, and effectively avoiding a case in the conventional technology in which when a user browses a picture, because it takes a long time to obtain a picture with original resolution through decoding and then obtain a thumbnail with low resolution through scaling in the conventional technology, the user cannot obtain a preview picture in a timely manner.

In addition, based on the foregoing decoding method, in a corresponding encoding method, only a side information bitstream and a picture bitstream need to be obtained. Compared with an iterative picture encoding solution based on a recurrent neural network in the conventional technology, the encoding method can effectively reduce computing complexity. Specifically, as described in the background, in an encoding solution in the iterative picture coding solution based on a recurrent neural network in the conventional technology, a plurality of times of iterative encoding are required to obtain a plurality of encoder-side bitstreams, so as to reconstruct a plurality of preview pictures based on the plurality of bitstreams during decoding, to implement progressive decoding. Therefore, computing complexity is high. However, in the encoding solution in this application, a corresponding encoder-side bitstream can be obtained only by separately performing one-time encoding on the picture bitstream and the side information bitstream. During decoding, a plurality of preview pictures may be gradually reconstructed based on a side information feature obtained by decoding the side information bitstream and gradually increasing picture features obtained by gradually decoding the picture bitstream, to implement progressive decoding. In conclusion, the decoding solution provided in this embodiment of this application can effectively reduce computing complexity in an entire coding process.

In addition, based on the foregoing decoding method, in a corresponding encoding method, only a side information bitstream and a picture bitstream need to be obtained. Compared with a solution in which a thumbnail is additionally encoded and transmitted in the conventional technology, the encoding method can reduce a size of an overall bitstream file, and improve a compression rate. Specifically, a bitstream corresponding to the thumbnail additionally encoded and transmitted in the conventional technology is an additional bitstream. However, both the side information bitstream and the picture bitstream in this embodiment of this application are necessary bitstreams for obtaining a final reconstructed picture. Therefore, no redundant bitstream is added, so that a size of an overall bitstream file can be reduced, and a compression rate can be improved.

It may be understood that the first picture feature set mentioned in this embodiment of this application may be a picture feature obtained through a feature extraction module below.

In a possible implementation, the obtaining a preview picture of the to-be-decoded picture based on the picture side information feature includes: obtaining a first preview picture of the to-be-decoded picture based on the picture side information feature.

In a possible implementation, the decoding method further includes: obtaining a picture bitstream of the to-be-decoded picture, where the picture bitstream includes data of a plurality of channels of the to-be-decoded picture; and obtaining first decoded data based on the picture bitstream, where the first decoded data is at least a part of picture features in the first picture feature set. Correspondingly, the obtaining a preview picture of the to-be-decoded picture based on the picture side information feature includes: obtaining a second preview picture based on the picture side information feature and the first decoded data, where a similarity between the second preview picture and the to-be-decoded picture is greater than a similarity between the first preview picture and the to-be-decoded picture.

It may be understood that the picture bitstream in this embodiment of this application includes encoded data corresponding to all picture features of the to-be-decoded picture. In this embodiment of this application, the first decoded data may be decoded data obtained by decoding data of some channels with high output response importance in the picture bitstream.

It may be understood that, a high-quality preview picture can be generated through reconstruction based on the side information feature and the first decoded data, to facilitate previewing by a user. In addition, in the foregoing decoding solution, the side information feature may be combined with picture features with different quantities of channels to obtain preview pictures with various quality, so as to meet various preview picture quality requirements. In addition, after a part of picture features are decoded, a current preview picture may be obtained based on the decoded picture features and the side information feature, and after more picture features are decoded, a next preview picture continues to be obtained based on the decoded picture features and the side information feature to refresh the current preview picture, so that the user can gradually see preview pictures with higher quality. Progressive picture preview effect is achieved, and user experience is improved.

In a possible implementation, the obtaining first decoded data based on the picture bitstream includes: determining data of at least one channel in the picture bitstream; and decoding the data of the at least one channel to obtain the first decoded data.

In a possible implementation, the determining data of at least one channel in the picture bitstream includes:

obtaining the data of the at least one channel based on a data volume of data of each channel in the picture bitstream.

The obtaining the data of the at least one channel based on a data volume of data of each channel in the picture bitstream may include: sorting channels in descending order of data volumes of data of the channels in the picture bitstream, to obtain data of a specified quantity of top-ranked channels; or sorting channels in ascending order of data volumes of data of the channels in the picture bitstream, to obtain data of a specified quantity of lower-ranked channels.

It may be understood that, in this embodiment of this application, output response importance of a channel may be determined based on a volume of information included in each channel. When a channel includes a large volume of information, output response importance of the channel is high. When a channel includes a small volume of information, output response importance of the channel is low. The volume of information included in each channel may be determined based on a data volume of a bitstream corresponding to each channel.

It may be understood that, during decoding, time for decoding all channels is the same. Therefore, a channel with high output response importance is selected for decoding to obtain a part of picture features. Decoding data of only some channels greatly reduces decoding time. In addition, because the channel with the high output response importance is selected, quality of a preview picture is ensured as much as possible. Therefore, encoding time is reduced on the premise of ensuring the quality of the preview picture in this embodiment of this application.

It may be understood that, in the foregoing decoding solution, the side information feature may be combined with picture features with different quantities of channels to obtain preview pictures with various quality, so as to meet various preview picture quality requirements.

In a possible implementation, the decoding method further includes: obtaining a picture bitstream of the to-be-decoded picture, where the picture bitstream includes data of a plurality of channels of the to-be-decoded picture. Correspondingly, the obtaining a preview picture of the to-be-decoded picture based on the picture side information feature includes: decoding a first specified quantity of channel data in the picture bitstream to obtain second decoded data, and obtaining a third preview picture based on the picture side information feature and the second decoded data; and decoding a second specified quantity of channel data in the picture bitstream to obtain third decoded data, and obtaining a fourth preview picture based on the picture side information feature and the third decoded data, where the second specified quantity is greater than the first specified quantity, and the second specified quantity of channel data includes the first specified quantity of channel data.

It may be understood that, in this embodiment of this application, after obtaining a preview picture for the first time, the electronic device displays the preview picture obtained for the first time. Each time a new preview picture is obtained subsequently, a previous preview picture is replaced with the new preview picture for display. For example, when obtaining the third preview picture, the electronic device displays the third preview picture. After the fourth preview picture is obtained, the fourth preview picture replaces (or covers) the third preview picture, that is, the electronic device displays the fourth preview picture.

Based on the foregoing solution, a preview picture may be quickly obtained based on a decoded picture feature and the side information feature, and a currently displayed preview picture can be continuously refreshed, so that the user can gradually see a preview picture with higher quality, thereby achieving progressive picture preview effect and improving user experience.

In a possible implementation, channels in the picture feature may be successively decoded in descending order of data output response importance of the channels, to successively obtain the first specified quantity of channel data, the second specified quantity of channel data, and the like.

In a possible implementation, the method further includes: in response to an operation of tapping the preview picture by a user, obtaining, based on the picture bitstream, a reconstructed picture corresponding to the to-be-decoded picture.

It may be understood that the reconstructed picture may be a large picture corresponding to the preview picture.

In a possible implementation, the obtaining a preview picture based on the picture side information feature includes: obtaining an average value of data in the picture feature based on the picture side information feature, and obtaining the preview picture based on the average value of the data in the picture feature.

In a possible implementation, the obtaining at least a part of picture features based on the picture bitstream includes: determining, based on the picture side information feature, a probability corresponding to each piece of data in the picture feature; and obtaining the at least a part of picture features based on the picture bitstream and the probability corresponding to each piece of data in the picture feature.

The determining, based on the picture side information feature, a probability corresponding to each piece of data in the picture feature may include: determining, based on the picture side information feature, an average value and a variance corresponding to data in the picture feature, and determining, based on the average value and the variance corresponding to the data in the picture feature, the probability corresponding to each piece of data in the picture feature.

According to a second aspect, an embodiment of this application provides a picture encoding method, including: obtaining a to-be-encoded picture; obtaining a first picture feature set of the to-be-encoded picture; obtaining a side information feature of the to-be-encoded picture based on the first picture feature set of the to-be-encoded picture, where the side information feature is a second picture feature set obtained by performing feature extraction on the first picture feature set based on a hyperprior encoding neural network, a data volume of the second picture feature set is less than a data volume of the first picture feature set, the hyperprior encoding neural network is obtained through training constraint based on a bit rate loss, a reconstructed picture distortion loss, and a preview picture distortion loss, and the preview picture distortion loss represents a similarity difference between an original training picture and a preview picture of the original training picture; and obtaining a picture bitstream based on the side information feature and the first picture feature set of the to-be-encoded picture, and obtaining a side information bitstream based on the side information feature of the to-be-encoded picture, where the side information bitstream is used by a decoder side to obtain a preview picture of the to-be-encoded picture.

It may be understood that, because a data volume of the side information bitstream is small, the side information feature is encoded to obtain the side information bitstream, so that a preview picture with low resolution is quickly obtained based on the side information bitstream during decoding. In this way, during decoding, there is no need to obtain a thumbnail with low resolution through scaling after the original picture is obtained. It should be understood that the thumbnail may also be referred to as a preview picture. The solution provided in this embodiment of this application can effectively avoid a case in which a preview picture cannot be obtained in a timely manner when a user browses a picture in the conventional technology.

In a possible implementation, the obtaining a picture bitstream based on the side information feature and a picture feature of the to-be-encoded picture includes: obtaining distribution information of each piece of data in the first picture feature set based on the side information feature of the to-be-encoded picture; and encoding the picture feature based on the distribution information of each piece of data in the first picture feature set, to obtain the picture bitstream. It may be understood that the distribution information of each piece of data in the picture feature may mean an average value and a variance of all data in each channel in the picture feature.

In a possible implementation, the obtaining a side information bitstream based on the side information feature of the to-be-encoded picture includes: estimating a probability of each piece of data in the side information feature based on preset distribution information, to obtain the probability of each piece of data in the side information feature; and encoding the side information feature based on the probability of each piece of data in the side information feature, to obtain the side information bitstream.

According to a third aspect, an embodiment of this application provides a picture decoding method, including: obtaining a side information bitstream of a to-be-decoded picture; obtaining a picture side information feature based on the side information bitstream, where the picture side information feature is a second picture feature set obtained by performing, based on a hyperprior encoding neural network, feature extraction on a first picture feature set corresponding to the to-be-decoded picture, a data volume of the second picture feature set is less than a data volume of the first picture feature set, the hyperprior encoding neural network is obtained through training constraint based on a bit rate loss, a reconstructed picture distortion loss, and a preview picture distortion loss, and the preview picture distortion loss represents a similarity difference between an original training picture and a preview picture of the original training picture; obtaining a picture bitstream of the to-be-decoded picture, where the picture bitstream includes data of a plurality of channels of the to-be-decoded picture; decoding a first specified quantity of channel data in the picture bitstream to obtain first decoded data; obtaining a first reconstructed picture based on the picture side information feature and the first decoded data; decoding a second specified quantity of channel data in the picture bitstream to obtain second decoded data; and obtaining a second reconstructed picture based on the picture side information feature and the second decoded data.

It may be understood that, in this embodiment of this application, after obtaining a reconstructed picture for the first time, the electronic device displays the reconstructed picture obtained for the first time. Each time a new reconstructed picture is obtained subsequently, a previous reconstructed picture is replaced with the new reconstructed picture for display. For example, after the first reconstructed picture is obtained, the first reconstructed picture is displayed. After the second reconstructed picture is obtained, the second reconstructed picture replaces the first reconstructed picture, that is, the electronic device displays the second reconstructed picture.

Based on the foregoing manner, the electronic device can gradually display reconstructed pictures with different quality, to achieve progressive decoding effect, so that when the user views a decoded picture corresponding to the original picture, frame freezing is avoided, and user experience is improved.

In a possible implementation, the decoding method further includes: decoding all channel data in the picture bitstream to obtain third decoded data, and obtaining a third reconstructed picture based on the side information feature and the third decoded data.

It may be understood that the third reconstructed picture may be a final reconstructed picture.

After obtaining the final reconstructed picture, the electronic device may display the final reconstructed picture.

In a possible implementation, the decoding method includes: after the first reconstructed picture is obtained, sending the first reconstructed picture to a display for display; and after the second reconstructed picture is obtained, sending the second reconstructed picture to the display for display, to cover the first reconstructed picture.

According to a fourth aspect, an embodiment of this application provides a picture decoding apparatus, including: an obtaining module, configured to obtain a side information bitstream of a to-be-decoded picture, where the obtaining module is configured to obtain a picture side information feature based on the side information bitstream, where the picture side information feature is a second picture feature set obtained by performing, based on a hyperprior encoding neural network, feature extraction on a first picture feature set corresponding to the to-be-decoded picture, a data volume of the second picture feature set is less than a data volume of the first picture feature set, and during training of the hyperprior encoding neural network, training constraint is performed based on a bit rate loss, a reconstructed picture distortion loss, and a preview picture distortion loss; and a pre-decoding module, configured to obtain a preview picture of the to-be-decoded picture based on the picture side information feature.

In a possible implementation, the obtaining module is further configured to: obtain a picture bitstream of the to-be-decoded picture, where the picture bitstream includes data of a plurality of channels of the to-be-decoded picture; and obtain first decoded data based on the picture bitstream, where the first decoded data is at least a part of picture features in the first picture feature set.

In a possible implementation, the obtaining module includes a hyperprior decoding module and an entropy decoding module; the hyperprior decoding module is configured to determine an average value and a variance of data in the first picture feature set based on the picture side information feature; the entropy decoding module is configured to determine, based on the average value and the variance of the data in the first picture feature set, a probability corresponding to each piece of data in the picture feature; and the entropy decoding module is configured to obtain the first decoded data based on the picture bitstream and a probability corresponding to each piece of data in the first picture feature set.

In a possible implementation, the obtaining module further includes a hyperprior entropy estimation module; the hyperprior entropy estimation module is configured to obtain, based on the side information bitstream, a probability corresponding to each piece of data in the picture side information feature; and the entropy decoding module is configured to decode the side information bitstream based on the probability corresponding to each piece of data in the picture side information feature, to obtain the picture side information feature.

In a possible implementation, the pre-decoding module is configured to: obtain a first preview picture based on the picture side information feature; or obtain a second preview picture based on the picture side information feature and the first decoded data; and a similarity between the second preview picture and the to-be-decoded picture is greater than a similarity between the first preview picture and the to-be-decoded picture.

In a possible implementation, the pre-decoding module is a pre-decoding network, and the pre-decoding network includes a picture scaling operator.

Alternatively, the pre-decoding network is capable of obtaining a preview picture with a specified size.

According to a fifth aspect, an embodiment of this application provides a picture encoding apparatus, including: a feature extraction module, configured to: obtain a to-be-encoded picture, and obtain a first picture feature set of the to-be-encoded picture; a hyperprior encoding module, configured to obtain a side information feature of the to-be-encoded picture based on the first picture feature set of the to-be-encoded picture, where the side information feature is a second picture feature set obtained by performing feature extraction on the first picture feature set based on the hyperprior encoding module, a data volume of the second picture feature set is less than a data volume of the first picture feature set, the hyperprior encoding module is obtained through training constraint based on a bit rate loss, a reconstructed picture distortion loss, and a preview picture distortion loss, and the preview picture distortion loss represents a similarity difference between an original training picture and a preview picture of the original training picture; and

a feature encoding module, configured to: obtain a picture bitstream based on the side information feature and the first picture feature set of the to-be-encoded picture, and obtain a side information bitstream based on the side information feature of the to-be-encoded picture.

In a possible implementation, the feature encoding module includes a hyperprior decoding module and an entropy encoding module; the hyperprior decoding module is configured to obtain an average value and a variance of data in the first picture feature set based on the side information feature of the to-be-encoded picture; and the entropy encoding module is configured to perform entropy encoding on the first picture feature set based on the average value and the variance of the data in the picture feature, to obtain the picture bitstream.

In a possible implementation, the feature encoding module includes a hyperprior entropy estimation module; the hyperprior entropy estimation module is configured to estimate a probability of each piece of data in the side information feature based on preset distribution information, to obtain the probability of each piece of data in the side information feature; and the entropy encoding module is configured to encode the side information feature based on the probability of each piece of data in the side information feature, to obtain the side information bitstream.

In a possible implementation, the hyperprior encoding module includes a hyperprior encoding neural network. During training of the hyperprior encoding neural network, training constraint is performed based on the bit rate loss, the reconstructed picture distortion loss, and the preview picture distortion loss.

It may be understood that, in some embodiments, to implement a progressive preview picture, the preview picture distortion loss may be a variable preview picture loss, and distortion losses in all progressive states are considered. For example, if there are N progressive states, the distortion loss has N forms. After training of the hyperprior encoding neural network is completed, quality of preview pictures in the N progressive states, that is, quality of preview pictures successively obtained through decoding, can be ensured. A distortion loss in the conventional technology is a non-variable distortion loss, and can only be used to ensure final decoding quality.

In some embodiments, to implement a progressive reconstructed picture, the reconstructed picture distortion loss may be a variable picture loss, and distortion losses in all progressive states are considered. For example, if there are N progressive states, the distortion loss has N forms. After training of the hyperprior encoding neural network is completed, quality of preview pictures in the N progressive states, that is, quality of pictures successively obtained through decoding, can be ensured.

In some other embodiments, to implement a progressive reconstructed picture, during training of the hyperprior encoding neural network that obtains the side information feature, constraint training may be performed based on two losses, where one is a bit rate loss, and the other is a picture distortion loss. The picture distortion loss is a variable distortion loss.

According to a sixth aspect, an embodiment of this application provides a picture decoding apparatus, including: an obtaining module, configured to obtain a side information bitstream of a to-be-decoded picture, where the obtaining module is configured to obtain a picture side information feature based on the side information bitstream, where the picture side information feature is a second picture feature set obtained by performing, based on a hyperprior encoding neural network, feature extraction on a first picture feature set corresponding to the to-be-decoded picture, a data volume of the second picture feature set is less than a data volume of the first picture feature set, the hyperprior encoding neural network is obtained through training constraint based on a bit rate loss, a reconstructed picture distortion loss, and a preview picture distortion loss, and the preview picture distortion loss represents a similarity difference between an original training picture and a preview picture of the original training picture; the obtaining module is configured to obtain a picture bitstream of the to-be-decoded picture, where the picture bitstream includes data of a plurality of channels of the to-be-decoded picture; and the obtaining module is configured to decode a first specified quantity of channel data in the picture bitstream to obtain first decoded data; and a decoding module, configured to obtain a first reconstructed picture based on the picture side information feature and the first decoded data, where the obtaining module is configured to decode a second specified quantity of channel data in the picture bitstream to obtain second decoded data; and the decoding module is configured to obtain a second reconstructed picture based on the picture side information feature and the second decoded data.

In a possible implementation, the decoding module is configured to: after all channel data in the picture bitstream is decoded to obtain third decoded data, obtain a third reconstructed picture based on the side information feature and the third decoded data. The decoding module is configured to: after the first reconstructed picture is obtained, send the first reconstructed picture to a display for display.

In a possible implementation, the decoding module is configured to: after the second reconstructed picture is obtained, send the second reconstructed picture to the display for display, to cover the first reconstructed picture.

According to a seventh aspect, an embodiment of this application provides an electronic device, including the picture decoding apparatus and/or the picture encoding apparatus mentioned in embodiments of this application.

According to an eighth aspect, an embodiment of this application provides a coding apparatus. The coding apparatus is an encoding apparatus or a decoding apparatus, and the coding apparatus includes: one or more processors and a memory, where the memory is configured to store program instructions, and when the program instructions are executed by the one or more processors, the picture decoding method or the picture encoding method mentioned in embodiments of this application is implemented.

According to a ninth aspect, an embodiment of this application provides a readable storage medium. The readable medium stores instructions, and when the instructions are executed on an electronic device, the electronic device is enabled to perform the picture decoding method or the picture encoding method mentioned in embodiments of this application.

According to a tenth aspect, an embodiment of this application provides a computer program product, including instructions. When the instructions are executed on an electronic device, the electronic device is enabled to perform the picture decoding method or the picture encoding method mentioned in embodiments of this application.

According to an eleventh aspect, an embodiment of this application provides a computer-readable storage medium. The computer-readable storage medium stores a picture bitstream and a side information bitstream obtained in the encoding method in embodiments of this application that is performed by one or more processors.

According to a twelfth aspect, an embodiment of this application provides a decoding apparatus, including a memory and a decoder. The memory is configured to store a picture bitstream and a side information bitstream. The decoder is configured to perform a picture decoding method.

According to a thirteenth aspect, an embodiment of this application provides an artificial intelligence neural network coding architecture, including a coding network and a hyperprior coding network. The coding network includes an encoding neural network, a first entropy encoder, a first entropy decoder, and a decoding neural network. The hyperprior coding network includes a hyperprior encoding neural network, a second entropy encoder, a second entropy decoder, and a pre-decoding neural network. A to-be-encoded picture is processed by using the encoding neural network, to obtain a first picture feature set of the to-be-encoded picture. Feature extraction is performed on the first picture feature set by using the hyperprior encoding neural network, to obtain a side information feature. Entropy encoding is performed on the first picture feature set by using the first entropy encoder, to obtain a picture bitstream. Entropy encoding is performed on the side information feature by using the second entropy encoder, to obtain a side information bitstream. Entropy decoding is performed on the side information bitstream by using the second entropy decoder, to obtain a decoded side information feature. The decoded side information feature is processed by using the pre-decoding neural network, to obtain a preview picture of the to-be-encoded picture. Entropy decoding is performed on the picture bitstream by using the first entropy decoder, to obtain an entropy decoding result corresponding to the picture bitstream. The entropy decoding result corresponding to the picture bitstream is processed by using the decoding neural network, to obtain a reconstructed picture of the to-be-encoded picture.

It should be understood that an entropy decoding result corresponding to the side information feature may also be referred to as the decoded side information feature, and the entropy decoding result corresponding to the picture bitstream may also be referred to as a decoded picture feature.

In a possible implementation, the hyperprior coding network further includes a hyperprior decoding neural network. The entropy decoding result corresponding to the side information feature is processed by using the hyperprior decoding neural network, to obtain distribution information of the first picture feature set, where the distribution information is used by the first entropy encoder to perform entropy encoding on the first picture feature set, and is used by the first entropy encoder to perform entropy decoding on the picture bitstream. An output result or a part of an output result of the hyperprior decoding neural network is processed by using the pre-decoding neural network, to obtain a preview picture of the to-be-encoded picture.

According to a fourteenth aspect, an embodiment of this application provides an artificial intelligence neural network decoding architecture, including a coding network and a hyperprior coding network. The coding network includes a first entropy decoder and a decoding neural network. The hyperprior coding network includes a second entropy decoder and a pre-decoding neural network. The second entropy decoder is used to obtain a side information bitstream of a to-be-decoded picture, and perform entropy decoding on the side information bitstream, to obtain an entropy decoding result corresponding to a side information feature. The entropy decoding result corresponding to the side information feature is processed by using the pre-decoding neural network to obtain a first preview picture of the to-be-decoded picture. The first entropy decoder is used to obtain a picture bitstream of the to-be-decoded picture, and perform entropy decoding on the picture bitstream, to obtain an entropy decoding result corresponding to the picture bitstream. The entropy decoding result corresponding to the picture bitstream is processed by using the decoding neural network to obtain a reconstructed picture of the to-be-decoded picture.

According to a fifteenth aspect, an embodiment of this application provides an artificial intelligence neural network encoding architecture, including a coding network and a hyperprior coding network. The coding network includes an encoding neural network and a first entropy encoder. The hyperprior coding network includes a hyperprior encoding neural network and a second entropy encoder. A to-be-encoded picture is processed by using the encoding neural network, to obtain a first picture feature set of the to-be-encoded picture. Feature extraction is performed on the first picture feature set by using the hyperprior encoding neural network, to obtain a side information feature. Entropy encoding is performed on the first picture feature set by using the first entropy encoder, to obtain a picture bitstream. Entropy encoding is performed on the side information feature by using the second entropy encoder, to obtain a side information bitstream.

According to a sixteenth aspect, an embodiment of this application provides an artificial intelligence neural network decoding architecture, including a coding network and a hyperprior coding network. The coding network includes a first entropy decoder and a decoding neural network. The hyperprior coding network includes a second entropy decoder and a pre-decoding neural network. The second entropy decoder is used to obtain a side information bitstream of a to-be-decoded picture, and perform entropy decoding on the side information bitstream, to obtain an entropy decoding result corresponding to a side information feature.

**EP 4 529 167 A1**

The first entropy decoder is used to obtain a picture bitstream of the to-be-decoded picture, and decode a first specified quantity of channel data in the picture bitstream, to obtain first decoded data. The pre-decoding neural network is used to process the entropy decoding result corresponding to the side information feature and the first decoded data, to obtain a second preview picture of the to-be-decoded picture.

According to a seventeenth aspect, an embodiment of this application provides an artificial intelligence neural network decoding architecture, including a coding network and a hyperprior coding network. The coding network includes a first entropy decoder and a decoding neural network. The hyperprior coding network includes a second entropy decoder and a pre-decoding neural network. The second entropy decoder is used to obtain a side information bitstream of a to-be-decoded picture, and perform entropy decoding on the side information bitstream, to obtain an entropy decoding result corresponding to a side information feature.

The first entropy decoder is used to obtain a picture bitstream of the to-be-decoded picture, and decode a second specified quantity of channel data in the picture bitstream, to obtain second decoded data. The pre-decoding neural network is used to process the entropy decoding result corresponding to the side information feature and the second decoded data, to obtain a third preview picture of the to-be-decoded picture. The first entropy decoder is used to decode a third specified quantity of channel data in the picture bitstream, to obtain third decoded data. The pre-decoding neural network is used to process the entropy decoding result corresponding to the side information feature and the third decoded data, to obtain a third preview picture of the to-be-decoded picture.

According to an eighteenth aspect, an embodiment of this application provides an artificial intelligence neural network decoding architecture, including a coding network and a hyperprior coding network. The coding network includes a first entropy decoder and a decoding neural network. The hyperprior coding network includes a second entropy decoder and a pre-decoding neural network. The second entropy decoder is used to obtain a side information bitstream of a to-be-decoded picture, and perform entropy decoding on the side information bitstream, to obtain an entropy decoding result corresponding to a side information feature. The entropy decoding result corresponding to the side information feature is processed by using the pre-decoding neural network to obtain a preview picture of the to-be-decoded picture. The first entropy decoder is used to obtain a picture bitstream of the to-be-decoded picture, and decode a first specified quantity of channel data in the picture bitstream, to obtain first decoded data. The entropy decoding result corresponding to the side information feature and the first decoded data are processed by using the decoding neural network, to obtain a first reconstructed picture of the to-be-decoded picture. A first specified quantity of channel data in the picture bitstream is decoded by using the first entropy decoder, to obtain second decoded data. The entropy decoding result corresponding to the side information feature and the second decoded data are processed by using the decoding neural network, to obtain a second reconstructed picture of the to-be-decoded picture.

## BRIEF DESCRIPTION OF DRAWINGS

FIG. 1 is a diagram of an encoding and decoding method according to some embodiments of this application;

FIG. 2 is a diagram of an application scenario of an encoding and decoding method according to some embodiments of this application;

FIG. 3 is a diagram of an encoding and decoding method according to some embodiments of this application;

FIG. 4 is a diagram of an encoding and decoding method according to some embodiments of this application;

FIG. 5a to FIG. 5c each are a diagram of an encoding and decoding method according to some embodiments of this application;

FIG. 6 is a block diagram of an electronic device according to some embodiments of this application;

FIG. 7 is a schematic flowchart of an encoding and decoding solution according to some embodiments of this application;

FIG. 8 is a schematic flowchart of an encoding and decoding solution according to some embodiments of this application;

FIG. 9 is a schematic flowchart of an encoding and decoding solution according to some embodiments of this application;

FIG. 10 is a schematic flowchart of an encoding and decoding solution in an album scenario according to some embodiments of this application;

FIG. 11 is a schematic flowchart of an encoding and decoding solution in a device-cloud collaboration scenario according to some embodiments of this application;

FIG. 12 is a schematic flowchart of an encoding method according to some embodiments of this application;

FIG. 13 is a schematic flowchart of a decoding method according to some embodiments of this application;

FIG. 14a is a diagram showing an RD curve obtained by decoding 24 PNG pictures with resolution of 768x512 or 512x768 in a Kodak test set by using the solution shown in FIG. 13 according to some embodiments of this application;

FIG. 14b is a diagram of a thumbnail list obtained by decoding 24 PNG pictures with resolution of 768x512 or 512x768 in a Kodak test set by using the solution shown in FIG. 13 according to some embodiments of this application;

FIG. 15 is a schematic flowchart of a decoding method according to some embodiments of this application;

FIG. 16a is a diagram of a relationship curve between quality of a preview picture and a quantity of channels used for a picture feature measured in a Kodak test set according to some embodiments of this application;

FIG. 16b is a diagram of a relationship curve between time consumption and a quantity of channels used for a picture feature measured in a Kodak test set according to some embodiments of this application;

FIG. 17 is a schematic flowchart of a decoding method according to some embodiments of this application;

FIG. 18 is a schematic flowchart of a decoding method according to some embodiments of this application;

FIG. 19 is a diagram of progressive reconstructed pictures obtained by decoding a PNG picture with resolution of 768x512 in a Kodak test set by using the solution shown in FIG. 18 according to some embodiments of this application;

FIG. 20 is a diagram of a hardware structure of an electronic device according to some embodiments of this application;

FIG. 21 is a block diagram of an encoding apparatus according to some embodiments of this application; and

FIG. 22 is a diagram of an architecture of a cloud application device system according to some embodiments of this application.

## DESCRIPTION OF EMBODIMENTS

Illustrative embodiments of this application include but are not limited to a picture encoding method and apparatus and a picture decoding method and apparatus.

To understand solutions in embodiments of this application more clearly, the following first explains and describes some terms in embodiments of this application.

Picture feature: may be a feature map. For example, the feature map may include multidimensional data output by a convolutional layer, an activation layer, a pooling layer, a batch normalization layer, and the like in a convolutional neural network, and usually includes at least three dimensions: width (Width), height (Height), and channel (Channel). To be specific, the picture feature may include a plurality of channels, and each channel includes width * height (H * W) pieces of data. Data of each channel may represent a part of corresponding features of a picture.

Side information feature: The side information feature is a feature further extracted from a picture feature. The side information feature is a feature map, and includes fewer feature elements than the picture feature. In some embodiments, the side information feature is partial or approximate information of the picture feature that is obtained by transforming the picture feature by using a corresponding function. For example, the side information feature may include three-dimensional data in three dimensions: width (Width), height (Height), and channel (Channel), and is usually used to assist in entropy encoding or entropy decoding, that is, assist in picture reconstruction.

Entropy encoding: is encoding without any information loss according to an entropy principle in an encoding process. Common entropy encoding includes Huffman (Huffman) encoding, arithmetic encoding (arithmetic coding), and the like.

Entropy decoding: is a technology for restoring picture data that has undergone entropy encoding to an original picture. Common entropy decoding includes Huffman (Huffman) decoding, arithmetic decoding (arithmetic coding), and the like.

Picture bitstream: is a bitstream obtained by performing entropy encoding on a picture feature or a quantized picture feature. The picture bitstream includes encoded data corresponding to a plurality of pieces of channel data in the picture feature.

Bit rate: indicates an average encoding length required for encoding a unit pixel in a picture compression task. Generally, a higher bit rate indicates better picture reconstruction quality.

As described in the background, in some decoding solutions in the conventional technology, regardless of a size of a thumbnail required by an application, a picture with original resolution needs to be first obtained through decoding. In this solution, an electronic device has a high requirement for a computing capability. When the computing capability of the electronic device is insufficient, a thumbnail interface may not be refreshed in a timely manner, and a user may feel obvious frame freezing. For example, when the user slides to browse a picture by using a web application, a thumbnail interface may not be refreshed in a timely manner, and the user may feel obvious frame freezing.

In some other coding solutions, a picture coding solution based on a recurrent neural network is used. Specifically, as shown in FIG. 3, after each iteration, an encoder side forms an iterative bitstream and reconstruction error data for a next iteration. For example, bitstreams obtained through three iterations shown in FIG. 3 are an iterative bitstream 1, an iterative bitstream 2, and an iterative bitstream 3. After receiving these bitstreams, a decoder side successively decodes each bitstream to obtain a basic reconstructed picture and a residual picture for use for a next reconstructed picture. In this way, quality of the reconstructed picture is gradually enhanced. However, in the foregoing solution, computing complexity of a plurality of iterations is high, and each time of decoding is performed based on each bitstream, resulting in poor scalability.

In some other coding solutions, a solution in which a thumbnail is additionally encoded and transmitted is used. Specifically, as shown in FIG. 4, to additionally obtain a bitstream of a thumbnail on an encoder side by using a solution like compression, the bitstream of the thumbnail and an entire-picture bitstream corresponding to a regular picture are combined for transmission, and the bitstream of the thumbnail is preferentially decoded on a decoder side for preview. However, in this solution, a size of an overall bitstream file is increased, a compression rate is reduced, and only a thumbnail having same quality as the thumbnail compressed on the encoder side can be obtained during decoding.

Therefore, the coding solution in the conventional technology has a problem that thumbnail obtaining is slow, computing complexity is high, decoding scalability is poor, and only a decoded picture with specified quality can be obtained.

To resolve the foregoing problem, embodiments of this application provide a picture encoding method and a picture decoding method, applied to an electronic device. It may be understood that the electronic device provided in embodiments of this application includes but is not limited to a smartphone, an in-vehicle apparatus, a personal computer, an artificial intelligence device, a tablet, a computer, a personal digital assistant, a smart wearable device (for example, a smartwatch, a band, or smart glasses), a smart voice device (for example, a smart speaker), a network access device (for example, a gateway), a server, and the like.

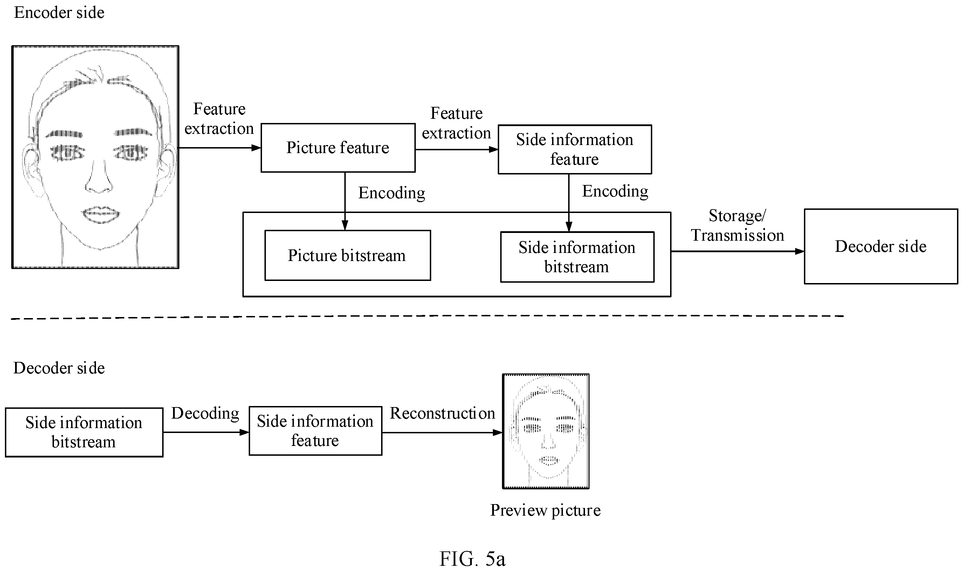

As shown in FIG. 5a, the picture encoding method may include: An original picture, that is, a to-be-encoded picture, is first obtained; and then feature extraction is performed on the original picture to obtain a picture feature corresponding to the original picture, and feature extraction is further performed on the picture feature to obtain a side information feature corresponding to the original picture. Subsequently, the side information feature is encoded to obtain a side information bitstream, the picture feature is encoded to obtain a picture feature bitstream, and the side information bitstream and the picture bitstream are jointly stored or sent to a decoder side.

It may be understood that, because a data volume of the side information bitstream is small, the side information feature is encoded to obtain the side information bitstream, so that a preview picture with low resolution is quickly obtained based on the side information bitstream during decoding. In this way, during decoding, there is no need to obtain a thumbnail with low resolution through scaling after the original picture is obtained. It should be understood that the thumbnail may also be referred to as a preview picture. The solution provided in embodiments of this application can effectively avoid a case in which a preview picture cannot be obtained in a timely manner when a user browses a picture in the conventional technology.

In addition, the foregoing solution of encoding based on the side information feature and the picture feature can effectively reduce computing complexity compared with an iterative picture encoding solution based on a recurrent neural network in the conventional technology. Specifically, as described in the background, in an encoding solution in an iterative picture coding solution based on a recurrent neural network in the conventional technology, a plurality of times of iterative encoding are required to obtain a plurality of encoder-side bitstreams, so as to reconstruct a plurality of preview pictures based on the plurality of bitstreams during decoding, to implement progressive decoding. Therefore, computing complexity is high. However, in the encoding solution in this application, a corresponding encoder-side bitstream can be obtained only by separately performing one-time encoding on the picture bitstream and the side information bitstream. During decoding, a plurality of preview pictures are gradually reconstructed based on a side information feature obtained by decoding the side information bitstream and gradually increasing picture features obtained by gradually decoding the picture bitstream, to implement progressive decoding. In conclusion, the encoding solution provided in embodiments of this application can effectively reduce computing complexity.

In addition, in the foregoing encoding method, only the side information bitstream and the picture bitstream need to be obtained. Compared with a solution in which a thumbnail is additionally encoded and transmitted in the conventional technology, the encoding method can reduce a size of an overall bitstream file, and improve a compression rate. Specifically, a bitstream corresponding to the thumbnail additionally encoded and transmitted in the conventional technology is an additional bitstream. However, both the side information bitstream and the picture bitstream in embodiments of this application are necessary bitstreams for obtaining a final reconstructed picture. Therefore, no redundant bitstream is added, so that a size of an overall bitstream file can be reduced, and a compression rate can be improved.

It may be understood that a manner of encoding the picture feature to obtain the picture bitstream may include: obtaining a probability of each feature element in the picture feature based on the side information feature, and encoding the picture feature based on the probability of each feature element in the picture feature to obtain the picture bitstream.

Corresponding to the foregoing picture encoding method, an embodiment of this application provides a picture decoding method. As shown in FIG. 5a, the method includes: A side information bitstream and a picture bitstream are received. The side information bitstream is decoded to obtain a side information feature, and a preview picture is obtained based on the side information feature to facilitate previewing by a user.

It may be understood that, in this embodiment of this application, the side information bitstream may be decoded by using a neural network. In addition, an operator for size scaling may be set in the neural network, to adjust a size of the preview picture.

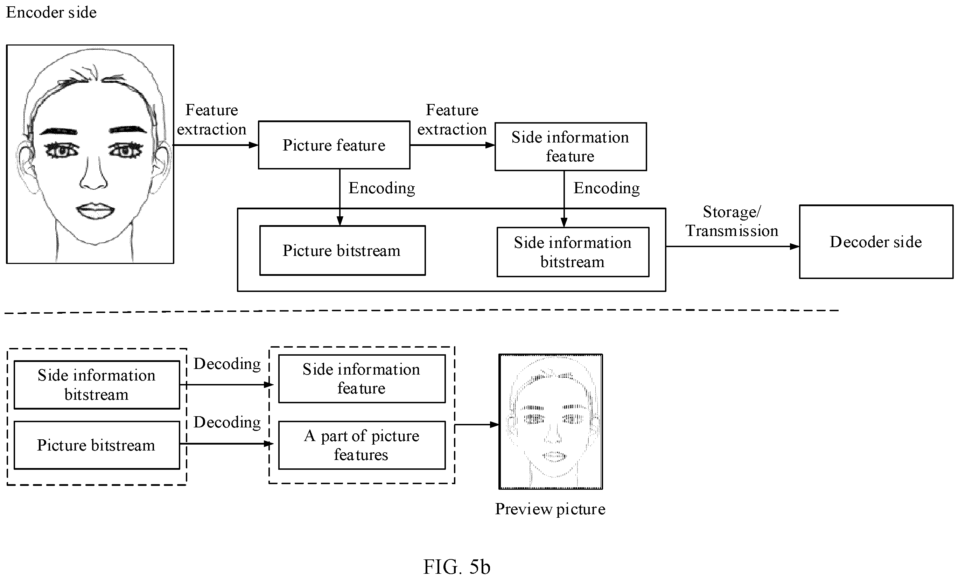

In an embodiment, as shown in FIG. 5b, in this application, partial decoding may be further performed on the picture bitstream to obtain a part of picture features, and then a preview picture with high quality is reconstructed based on the side information feature and the part of picture features, to facilitate previewing by the user. It may be understood that, as described above, the picture bitstream includes data of a plurality of channels. Therefore, the part of picture features may be decoded data obtained by decoding data of some channels with high output response importance in the picture bitstream.

It may be understood that, output response importance of a channel may be determined based on a volume of information included in each channel. When a channel includes a large volume of information, output response importance of the channel is high. When a channel includes a small volume of information, output response importance of the channel is low. The volume of information included in each channel may be determined based on a data volume of a bitstream corresponding to each channel.

It may be understood that, during decoding, time for decoding all channels is the same. Therefore, a channel with high output response importance is selected for decoding to obtain a part of picture features. Decoding data of only some channels greatly reduces decoding time. In addition, because the channel with the high output response importance is selected, quality of a preview picture is ensured as much as possible. Therefore, encoding time is reduced on the premise of ensuring the quality of the preview picture in this embodiment of this application.

It may be understood that the picture quality mentioned in embodiments of this application may include a similarity between a reconstructed picture or a preview picture obtained through decoding on a decoder side and an original to-be-compressed picture. A higher similarity indicates higher picture quality, and a lower similarity indicates lower picture quality.

A manner of performing partial decoding on the picture bitstream may include: determining data of some channels with high output response importance in the picture feature; decoding the data of the some channels to obtain first picture feature data; and obtaining a preview picture based on the side information feature and the first picture feature data.

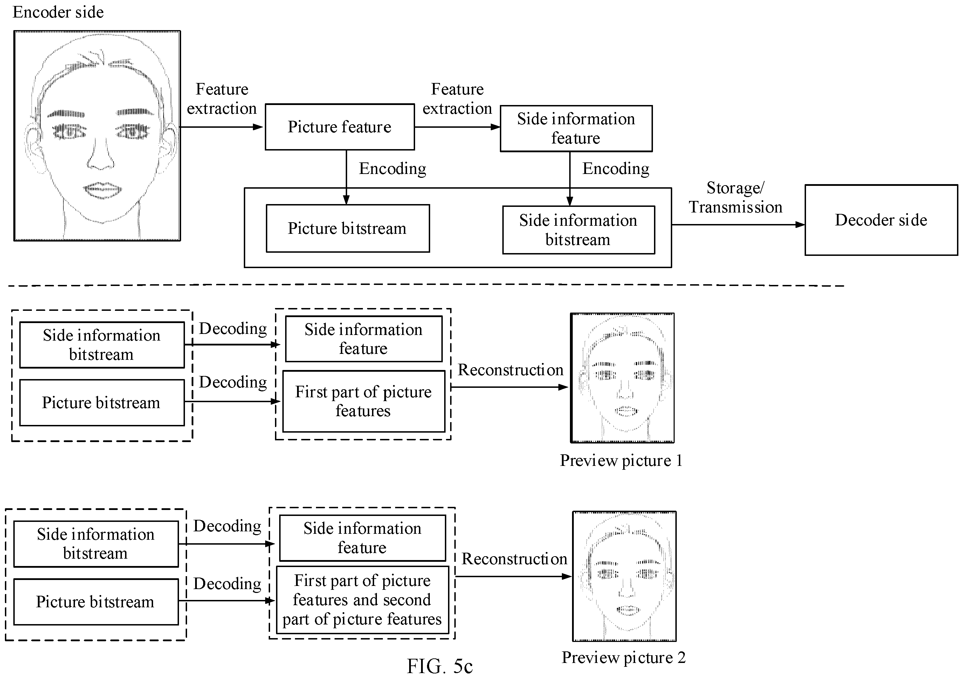

In some embodiments, in this application, the picture bitstream may be further decoded step by step (channel by channel), and a current preview picture is refreshed step by step based on a decoded picture feature and the side information feature. For example, as shown in FIG. 5c, after a first part of picture features are decoded, a preview picture 1 may be obtained based on the side information feature and the first part of picture features; and then after a second part of picture features are decoded, a preview picture 2 may be obtained based on the side information feature, the first part of picture features, and the second part of picture features.

It may be understood that, in this embodiment of this application, after obtaining a preview picture for the first time, the electronic device displays the preview picture obtained for the first time. Each time a new preview picture is obtained subsequently, a previous preview picture is replaced with the new preview picture for display. For example, after obtaining the preview picture 1, the electronic device displays the preview picture 1. After the preview picture 2 is obtained, the preview picture 2 replaces the preview picture 1, that is, the electronic device displays the preview picture 2.

Specifically, a manner of decoding the picture bitstream step by step and refreshing the current preview picture step by step based on the decoded picture feature and the side information feature may include:

sorting channels in the picture feature in descending order of output response importance, obtaining a first sequence, and successively decoding data of the channels in the first sequence; when a quantity of decoded channels reaches a first specified quantity, obtaining the preview picture 1 based on the picture side information feature and decoded data corresponding to a first specified quantity of channel data; and when the quantity of decoded channels reaches a second specified quantity, obtaining the preview picture 2 based on the picture side information feature and decoded data corresponding to a second specified quantity of channel data.

It may be understood that, in the foregoing decoding solution, the decoder side may quickly obtain the preview picture based on the side information bitstream. This effectively avoids a case in which a preview picture cannot be obtained in a timely manner when a user browses a picture in the conventional technology.

In addition, in the foregoing decoding solution, the side information feature may be combined with picture features with different quantities of channels to obtain preview pictures with various quality, so as to meet various preview picture quality requirements. In addition, the current preview picture may be refreshed based on the decoded picture feature and the side information feature, so that the user can gradually see a preview picture with higher quality, thereby achieving progressive picture preview effect and improving user experience.

It may be understood that the foregoing picture coding solution may be applied to various application scenarios such as web browsing and album browsing.

For example, in a web browsing application scenario, a web server may extract a picture feature and a side information feature from each photo by using the foregoing method, and then encode the picture feature and the side information feature to obtain a side information bitstream and a picture bitstream corresponding to each photo for storage.

When the web server needs to send, in response to an operation such as search of the user, a preview picture of a corresponding photo to a display interface for browsing by the user, in some embodiments, the web server decodes the side information bitstream corresponding to each photo to obtain the side information feature, obtains the preview picture based on the side information feature, and sends the preview picture to the display interface for preview.

In some other embodiments, the web server may decode the side information bitstream corresponding to each photo to obtain the side information feature, and partially decode the picture bitstream corresponding to each photo to obtain a part of picture features. For example, the web server may decode data of three channels with high output response importance in the picture bitstream to obtain picture features, reconstruct a preview picture based on the side information feature and the picture features corresponding to the data of the three channels, and send the preview picture to the display interface for preview.

In some other embodiments, the web server may first obtain a preview picture 1 based on the side information feature for preview, determine a first sequence based on output response importance of channels in the picture feature, and successively decode data of the channels. It is assumed that the picture bitstream includes a channel 1, a channel 2, a channel 3, a channel 4, and a channel 5, and a channel order in the determined first sequence is channel 2-channel 3-channel 4-channel 1-channel 5. If the first specified quantity is 1, after the channel 2 is decoded, a preview picture 2 is obtained based on the side information feature and decoded data corresponding to the channel 2 to replace the preview picture 1. If the second specified quantity is 2, after the channel 2 and the channel 3 are decoded, a preview picture 3 is obtained based on the side information feature and decoded data corresponding to the channel 2 and the channel 3 to replace the preview picture 2.

It may be understood that, after the user browses a plurality of preview pictures, when the user wants to view a decoded picture corresponding to any target preview picture, the user may view, by performing an operation such as tapping the target preview picture, the decoded picture corresponding to an original picture. To avoid frame freezing when the user views the decoded picture, an embodiment of this application provides a decoding method, including the following.

A side information bitstream and a picture bitstream corresponding to a to-be-decoded picture are obtained, and the side information bitstream is decoded to obtain a side information feature. The picture bitstream is decoded step by step (channel by channel) as described above, and a current picture is refreshed step by step based on a decoded picture feature and the side information feature. For example, after a first part of picture features are decoded, a first reconstructed picture may be obtained based on the side information feature and the first part of picture features. It may be understood that in this embodiment of this application, the first reconstructed picture may also be referred to as a first decoded picture. Then, after a second part of picture features are decoded, a second reconstructed picture may be obtained based on the side information feature, the first part of picture features, and the second part of picture features. It may be understood that in this embodiment of this application, the second reconstructed picture may also be referred to as a second decoded picture. Progressive decoding is completed in the foregoing manner until all picture features are decoded. After all the picture features are decoded, a final reconstructed picture is obtained based on the side information feature and all the picture features. It may be understood that each reconstructed picture in a reconstruction process in this embodiment of this application may be a reconstructed picture that matches an original picture in size. It may be understood that, in this embodiment of this application, the reconstructed picture that matches the original picture in size may also be referred to as a decoded picture that matches the original picture in size.

It may be understood that, in this embodiment of this application, after obtaining a reconstructed picture for the first time, the electronic device displays the reconstructed picture obtained for the first time. Each time a new reconstructed picture is obtained subsequently, a previous reconstructed picture is replaced with the new reconstructed picture for display. For example, after the first reconstructed picture is obtained, the first reconstructed picture is displayed. After the second reconstructed picture is obtained, the second reconstructed picture replaces the first reconstructed picture, that is, the electronic device displays the second reconstructed picture.

In this way, the electronic device can gradually display reconstructed pictures with different quality, to achieve progressive decoding effect, so that when the user views a decoded picture corresponding to the original picture, frame freezing is avoided, and user experience is improved.

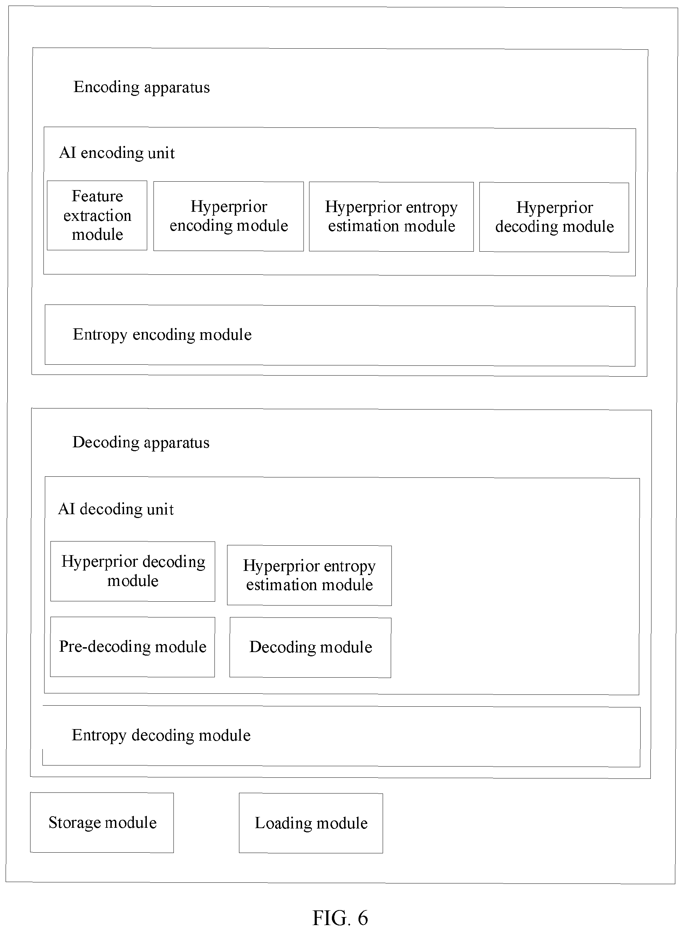

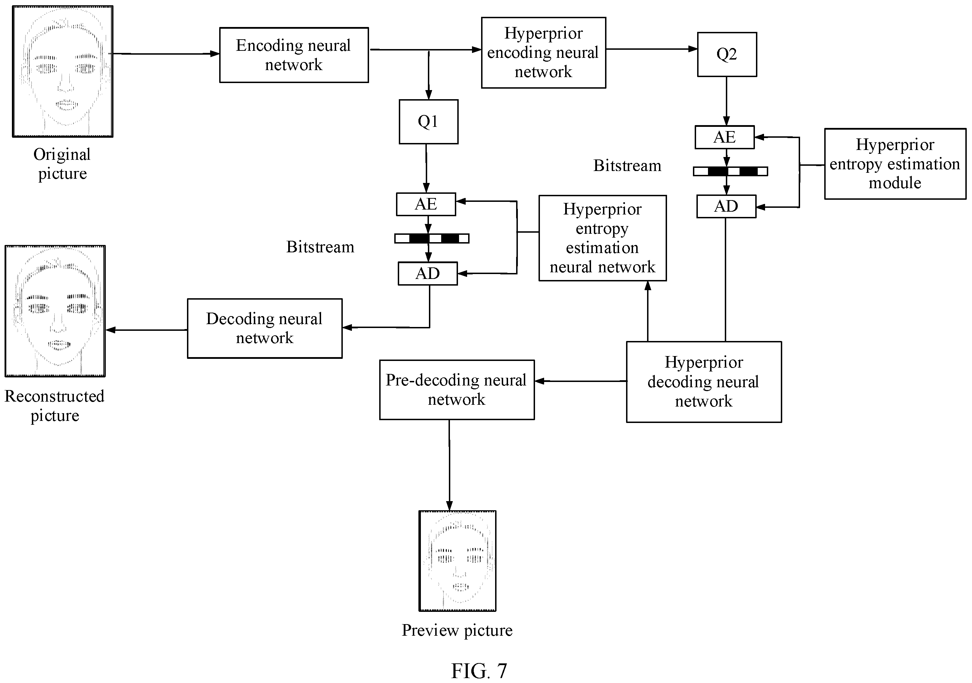

Before the encoding method and the decoding method in this application are described in detail below, a structure of the electronic device provided in embodiments of this application is first briefly described. FIG. 6 is a block diagram of an electronic device according to an embodiment of this application. FIG. 7 is a schematic flowchart of a coding solution according to an embodiment of this application. The structure of the electronic device provided in embodiments of this application is briefly described with reference to FIG. 6 and FIG. 7.

As shown in FIG. 6, the electronic device provided in embodiments of this application may include an encoding apparatus, a decoding apparatus, a storage module, and a loading module.

The encoding apparatus may include an AI encoding unit and an entropy encoding module. The artificial intelligence (Artificial Intelligence, AI) encoding unit may include a feature extraction module, a hyperprior encoding module, a hyperprior decoding module, and a hyperprior entropy estimation module. The feature extraction module is configured to obtain a to-be-encoded picture, and obtain a picture feature of the to-be-encoded picture.

In some embodiments, the feature extraction module may be an encoding neural network shown in FIG. 7, and is configured to extract a picture feature Q1 from a to-be-compressed picture by using the to-be-compressed picture as an input. Compared with the original picture, the picture feature Q1 output by the encoding neural network may vary in size to some extent, and redundant information is removed, so that entropy encoding is easier.

It may be understood that, in some embodiments, the feature extraction module may mark several channels with high output response importance in the extracted picture feature. In this way, when decoding is performed on a decoder side, data in the marked channels may be directly decoded to obtain a part of picture features, and the part of picture features and a side information feature are combined to obtain a preview picture.

The hyperprior encoding module is configured to obtain a side information feature of the to-be-encoded picture based on the picture feature of the to-be-encoded picture.

In some embodiments, the hyperprior encoding module may be a hyperprior encoding neural network shown in FIG. 7, and is configured to further extract brief information, that is, a side information feature Q2, from the picture feature. Compared with the picture feature Q1, the side information feature Q2 output by the hyperprior encoding network usually has a smaller size.

It may be understood that the side information feature in this embodiment of this application is substantially different from side information that can only be used to assist in encoding a picture feature in some embodiments.

In addition, in this embodiment of this application, the hyperprior encoding neural network configured to obtain the side information feature that can be used to generate a preview picture is, for example, also substantially different from a neural network configured to obtain side information in some embodiments.

Herein, for ease of describing the foregoing difference, the hyperprior encoding neural network configured to obtain the side information feature that can be used to generate a preview picture in this embodiment of this application is defined as a first hyperprior encoding neural network, and the neural network for obtaining side information that can only be used to assist in feature encoding on a picture in some embodiments is defined as a second hyperprior encoding neural network.

During training of the second hyperprior encoding neural network, an overall model is usually constrained by using two losses, where one is a bit rate loss (rate loss), and the other is a reconstructed picture distortion loss (distortion loss). That is, during training of the second hyperprior encoding network, parameter update is affected by only a gradient returned from the picture distortion loss and bit rate distortion loss. Therefore, an extracted side information feature can only be used for entropy estimation on a picture feature.

Specifically, during network training of neural networks related to a coding process, such as an encoding neural network, a hyperprior encoding neural network, a hyperprior entropy estimation neural network, a hyperprior decoding neural network, and a decoding network, the network obtains the bit rate loss and the reconstructed picture distortion loss through forward calculation (that is, a process in which an original picture x is processed by the neural networks related to the coding process, such as the encoding neural network, the hyperprior encoding neural network, the hyperprior entropy estimation neural network, the hyperprior decoding neural network, and the decoding network). Then, a total loss obtained by weighting the two losses gives, through back propagation, a value update gradient corresponding to each of all learnable parameters in all the neural networks, and an updated value of the parameter is determined based on a current value, the update gradient, and a learning rate. Such iteration makes the total loss tend to decrease with iteration, and a trained hyperprior decoding neural network can minimize bit rate overheads and a reconstructed picture distortion loss.

It may be understood that, the bit rate loss means a minimum quantity of bits (encoding overheads) required for encoding a quantized picture feature and side information feature into a bitstream. The reconstructed picture distortion loss means a similarity difference between a reconstructed picture and an original picture (a to-be-encoded picture). The difference may be a mean square error (Mean Square Error, MSE), a mean absolute error (Mean Absolute Error, MAE), or another loss function that can represent a distance between the reconstructed picture and the original picture.

A formula of an overall loss function during training of the second hyperprior encoding neural network is expressed as follows:

$$Loss = Loss_r + \alpha * Loss_d$$

Herein, $Loss_r$ represents the bit rate loss, and $Loss_d$ represents the reconstructed picture distortion loss. A ratio of the bit rate distortion loss to the reconstructed picture distortion loss may be controlled by controlling a value of $\alpha$, to control compression quality, that is, a compression rate.

During training of the first hyperprior encoding neural network in this embodiment of this application, an overall model is constrained based on three losses: a bit rate loss, a reconstructed picture distortion loss, and a preview picture distortion loss. To be specific, during training of the first hyperprior encoding network, parameter update is affected by a gradient returned from the three losses: the bit rate loss, the reconstructed picture distortion loss, and the preview picture distortion loss. Therefore, a side information feature extracted by using the first hyperprior encoding neural network can be used for entropy estimation on a picture feature, and a preview picture can be extracted by using a pre-decoding network.

Specifically, during network training of the hyperprior decoding neural network, the network obtains the bit rate loss, the reconstructed picture distortion loss, and the preview picture distortion loss through forward calculation (that is, a process in which an original picture x is processed by the neural networks related to the coding process, such as the encoding neural network, the hyperprior encoding neural network, the hyperprior entropy estimation neural network, the hyperprior decoding neural network, and the decoding network). Then, a total loss obtained by weighting the three losses gives, through back propagation, a value update gradient corresponding to each of all learnable parameters in the hyperprior decoding neural network, and an updated value of the parameter is determined based on a current value, the update gradient, and a learning rate. Such iteration makes the total loss tend to decrease with iteration, and a trained hyperprior decoding neural network can minimize a sum of the bit rate loss, the reconstructed picture distortion loss, and the preview picture distortion loss.

The bit rate loss means a minimum quantity of bits (encoding overheads) required for encoding a quantized picture feature and side information feature into a bitstream. The reconstructed picture distortion loss means a similarity difference between a reconstructed picture and an original picture (a to-be-encoded picture). The difference may be a mean square error (Mean Square Error, MSE), a mean absolute error (Mean Absolute Error, MAE), or another loss function that can depict a distance between the reconstructed picture and the original picture. The preview picture distortion loss means a similarity difference between a preview picture and the original picture. The difference may be a loss function such as a mean square error or a mean absolute error obtained through calculation after the preview picture and the original picture are scaled to a same size.

A formula of an overall loss function is expressed as follows:

$$\mathrm{Loss} = \mathrm{Loss_r} + \alpha * \mathrm{Loss_d} + \beta * \mathrm{Loss_{pd}}$$

Herein, $\mathrm{Loss_r}$ represents the bit rate loss, $\mathrm{Loss_d}$ represents the reconstructed picture distortion loss, and $\mathrm{Loss_{pd}}$ represents the preview picture distortion loss. A proportion relationship between the bit rate loss, the reconstructed picture distortion loss, and the preview picture distortion loss may be controlled by controlling values of $\alpha$ and $\beta$, to control compression quality, that is, a compression rate, and quality of a preview picture.

In some embodiments, to implement a progressive preview picture, the preview picture distortion loss may be a variable preview picture loss, and distortion losses in all progressive states are considered. For example, if there are N progressive states, the distortion loss has N forms. After training of the hyperprior encoding neural network is completed, quality of preview pictures in the N progressive states, that is, quality of preview pictures successively obtained through decoding, can be ensured.

In some embodiments, to implement a progressive reconstructed picture, the reconstructed picture distortion loss may be a variable picture loss, and distortion losses in all progressive states are considered. For example, if there are N progressive states, the distortion loss has N forms. After training of the hyperprior encoding neural network is completed, quality of reconstructed pictures in the N progressive states, that is, quality of pictures successively obtained through decoding, can be ensured.

In some embodiments, the encoding apparatus may further include a quantization module, configured to quantize the picture feature or the side information feature, to obtain quantized feature data.

The hyperprior decoding module is configured to obtain an average value and a variance of data in the picture feature based on the side information feature of the to-be-encoded picture.

The entropy encoding module is configured to perform entropy encoding on the picture feature based on the average value and the variance of the data in the picture feature, to obtain a picture bitstream.

The hyperprior entropy estimation module is configured to estimate a probability of each piece of data in the side information feature based on preset distribution information, to obtain the probability of each piece of data in the side information feature.

The entropy encoding module is configured to encode the side information feature based on the probability of each piece of data in the side information feature, to obtain a side information bitstream.

The entropy encoding module may be an arithmetic encoding (Arithmetic Encoding, AE) module shown in FIG. 7.

It may be understood that, in this embodiment of this application, the hyperprior decoding module, the hyperprior entropy estimation module, and the entropy encoding module may be used as modules in a feature encoding unit.

The decoding apparatus may include an AI decoding unit and an entropy decoding module. The AI decoding unit may include a hyperprior decoding module, a hyperprior entropy estimation module, a pre-decoding module, and a decoding module.

The entropy decoding module is configured to obtain a side information bitstream and a picture bitstream of a to-be-decoded picture.

The hyperprior entropy estimation module is configured to obtain, based on the side information bitstream, a probability corresponding to each piece of data in a picture side information feature.

The entropy decoding module is further configured to decode the side information bitstream based on the probability that corresponds to each piece of data in the picture side information feature and that is output by the hyperprior entropy estimation module, to obtain the picture side information feature. The entropy decoding module may be an arithmetic decoding (Arithmetic Decoding, AD) module shown in FIG. 7.

In some embodiments, the entropy decoding module may successively decode channels in the picture bitstream based on output response importance of the channels.

The hyperprior decoding module is configured to determine an average value and a variance of data in a picture feature based on the picture side information feature.

In some embodiments, the hyperprior decoding module may be a hyperprior decoding neural network shown in FIG. 7.

The pre-decoding module is configured to obtain a preview picture based on the picture side information feature, or based on the picture side information feature and at least a part of picture features.

In some embodiments, the pre-decoding module may be a pre-decoding neural network shown in FIG. 7. The pre-decoding network may reuse a parameter of the hyperprior decoding network, to reduce an overall parameter quantity and calculation amount of a model. Parameter reuse is specifically described as follows: The hyperprior decoding network is used as a part of the pre-decoding neural network. To be specific, the hyperprior decoding network may be first used to obtain the average value of the data in the picture feature, and then a preview picture is obtained by using the pre-decoding network based on the average value of the data in the picture feature.

In some embodiments, the pre-decoding neural network may directly obtain the preview picture through decoding by using the side information feature output by the entropy decoding module as an input.

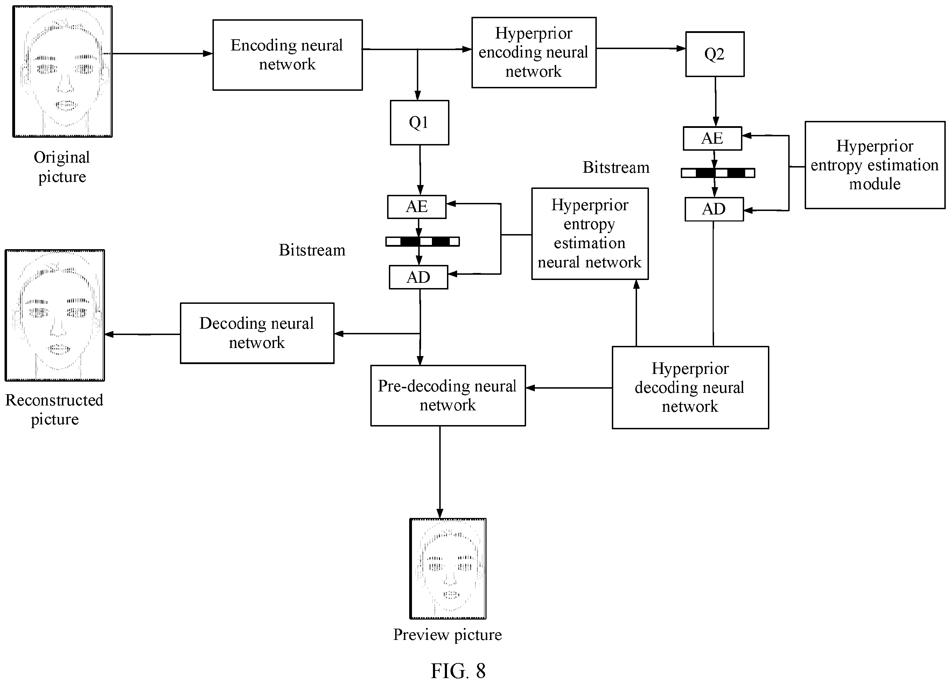

In some embodiments, as shown in FIG. 8, the pre-decoding neural network may alternatively use, as an input, the side information feature output by the entropy decoding module and at least a part of picture features, to obtain a preview picture with higher quality through decoding.

Specifically, in some embodiments, distribution information (an average value and a variance) may be extracted from the side information feature by using the hyperprior decoding network, and the distribution information and the part of picture features are jointly input into the pre-decoding neural network to obtain a preview picture through decoding.

In some other embodiments, distribution information (an average value and a variance) may be extracted from the side information feature by using the hyperprior decoding network, and then a corresponding part of the average value in the distribution information is replaced with the part of picture features, that is, distribution information obtained after the replacement is input into the pre-decoding neural network to obtain a preview picture through decoding.

In some embodiments, to make a size of an output preview picture meet a predetermined size, a picture scaling operator for implementing a feature map scaling operation may be introduced into the pre-decoding neural network, to control an output size of the pre-decoding neural network.

In some embodiments, the pre-decoding neural network may alternatively be set to a neural network that can output a target size.

In some embodiments, when the entropy decoding module decodes a first specified quantity of channel data, the pre-decoding neural network may be configured to obtain a first preview picture based on the picture side information feature and decoded data corresponding to the first specified quantity of channel data; and when the entropy decoding module decodes a second specified quantity of channel data, the pre-decoding neural network may be configured to obtain a second preview picture based on the picture side information feature and decoded data corresponding to the second specified quantity of channel data. After the entropy decoding module decodes all picture features, the pre-decoding neural network may be configured to obtain an original picture based on the picture side information feature and all the picture features. In other words, in this embodiment of this application, effect of progressive presentation of the preview picture can be implemented by using the pre-decoding network, that is, quality of the preview picture is continuously improved.

In some embodiments, this embodiment of this application may include a picture scaling module, and after the pre-decoding network, the picture scaling module scales the preview picture to a matched preview size.

The decoding module may be a decoding neural network shown in FIG. 7, and is configured to inversely map the picture feature to a reconstructed picture by using the picture feature output by the entropy decoding module as an input.

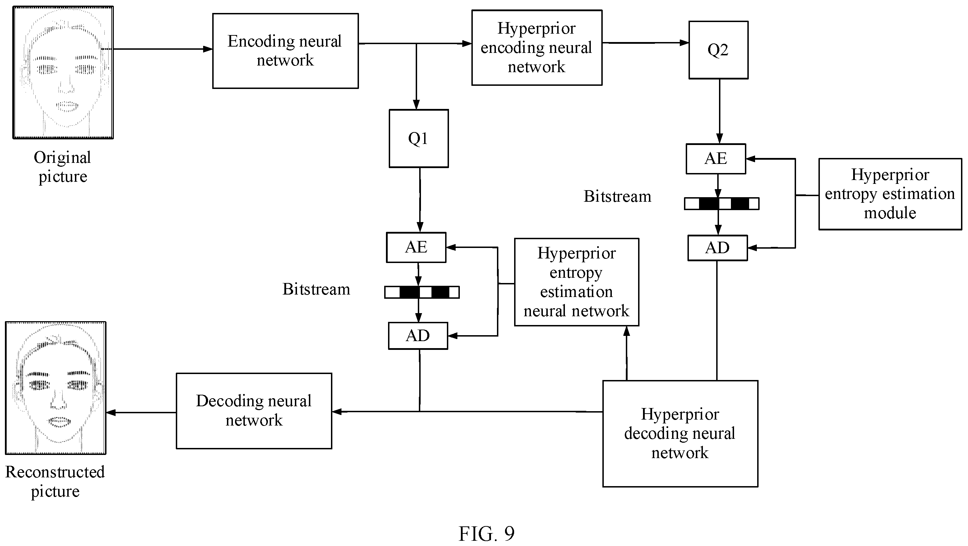

In some embodiments, as shown in FIG. 9, when the entropy decoding module decodes a first specified quantity of channel data, the decoding module may obtain a first reconstructed picture based on the picture side information feature and decoded data corresponding to the first specified quantity of channel data; and when the entropy decoding module decodes a second specified quantity of channel data, the decoding module may be configured to obtain a second reconstructed picture based on the picture side information feature and decoded data corresponding to the second specified quantity of channel data. After the entropy decoding module decodes all picture features, the decoding module may be configured to obtain a picture with final quality based on the picture side information feature and all the picture features.

To be specific, in a scenario in which a user views an original picture by performing an operation such as tapping a preview picture, the original picture may be presented to the user in a progressive manner in which picture quality is continuously improved.

The storage module is configured to store, at a corresponding storage location of a terminal, a data file generated by the entropy encoding module.

The loading module is configured to load the data file from the corresponding storage location of the terminal, and input the data file to the entropy decoding module.

The following briefly describes a coding method in an embodiment of this application by using FIG. 7 as an example. As shown in FIG. 7, when an original picture is encoded, an encoding neural network performs feature extraction on the original picture, to obtain a picture feature Q1 corresponding to the original picture.

When a side information bitstream needs to be obtained, the picture feature Q1 may be input into a hyperprior encoding neural network, and the hyperprior encoding neural network may further extract a side information feature Q2 from the picture feature Q1. A hyperprior entropy estimation module may estimate a probability of each piece of data in the side information feature Q2 based on preset distribution information, to obtain the probability of each piece of data in the side information feature. An arithmetic encoding (Arithmetic Encoding, AE) module may perform entropy encoding on the side information feature based on the probability of each piece of data in the side information feature Q2, to obtain the side information bitstream.

When a picture bitstream needs to be obtained, the picture feature Q1 may be input into the AE module. A hyperprior decoding neural network is configured to determine an average value and a variance of data in the picture feature Q1 based on the side information feature Q2. The hyperprior entropy estimation module may obtain a probability of each piece of data in the picture feature Q1 based on the average value and the variance of the data in the picture feature Q1. The AE module may perform entropy encoding on the picture feature Q1 based on the probability of each piece of data in the picture feature Q1, to obtain the picture bitstream.

The hyperprior entropy estimation module may obtain probability information corresponding to each piece of data in the picture side information feature, and a second entropy encoder AE performs entropy encoding on the side information feature Q2 based on the probability information to obtain the side information bitstream.

A second arithmetic decoding (Arithmetic Decoding, AD) module may perform entropy decoding on the side information bitstream based on the probability that corresponds to each piece of data in the picture side information feature and that is output by the hyperprior entropy estimation module, to obtain the decoded picture side information feature. It should be understood that although the pre-decoding neural network and the hyperprior decoding neural network in FIG. 7 are two separate networks, the decoded side information feature output by the second AD is processed by the hyperprior decoding neural network and then processed by the pre-decoding neural network, to obtain a preview picture of the original picture. In this case, an input of the pre-decoding neural network is an output or a part of an output of the hyperprior decoding neural network. The output of the hyperprior decoding neural network is further sent to an AE (referred to as a first AE) of a coding network to perform entropy encoding on the picture feature Q1, and sent to an AD (referred to as a first AD) of the coding network to perform entropy decoding on the picture bitstream.

In an optional case, the pre-decoding neural network and the hyperprior decoding neural network may be combined into one network, and the network is referred to as a pre-decoding neural network. The decoded side information feature output by the second AD is an input of the pre-decoding neural network. The pre-decoding neural network may be configured to reconstruct a preview picture of the original picture based on the decoded picture side information feature. In this case, it is equivalent to that the pre-decoding neural network is obtained by adding some additional layers on the basis of the existing hyperprior decoding neural network. The pre-decoding neural network is further configured to output distribution information (or may be referred to as probability information) of the picture feature for the first AE and the first AD to perform entropy encoding and entropy decoding respectively.

It may be understood that, the pre-decoding network may reuse a parameter of the hyperprior decoding network, to reduce an overall parameter quantity and calculation amount of a model. Parameter reuse is specifically described as follows: The hyperprior decoding network is used as a part of the pre-decoding neural network. To be specific, the hyperprior decoding network may be first used to obtain the average value of the data in the picture feature, and then a preview picture is obtained by using the pre-decoding network based on the average value of the data in the side information feature.

In some embodiments, as shown in FIG. 8, the pre-decoding neural network may alternatively use, as an input, the side information feature output by the AD module and at least a part of picture features, to obtain a preview picture with higher quality through decoding.

As shown in FIG. 7 and FIG. 8, when the picture bitstream is decoded to obtain a reconstructed picture, the picture feature output by the AD module may be used as an input to inversely map the picture feature to the reconstructed picture by using the decoding neural network.

In some embodiments, a method for obtaining the reconstructed picture may be shown in FIG. 9. The decoding neural network may decode a part of channel data, that is, a part of picture features, and the picture side information feature step by step based on the AD module, to successively obtain the plurality of reconstructed pictures described above, to implement a progressive reconstructed picture.

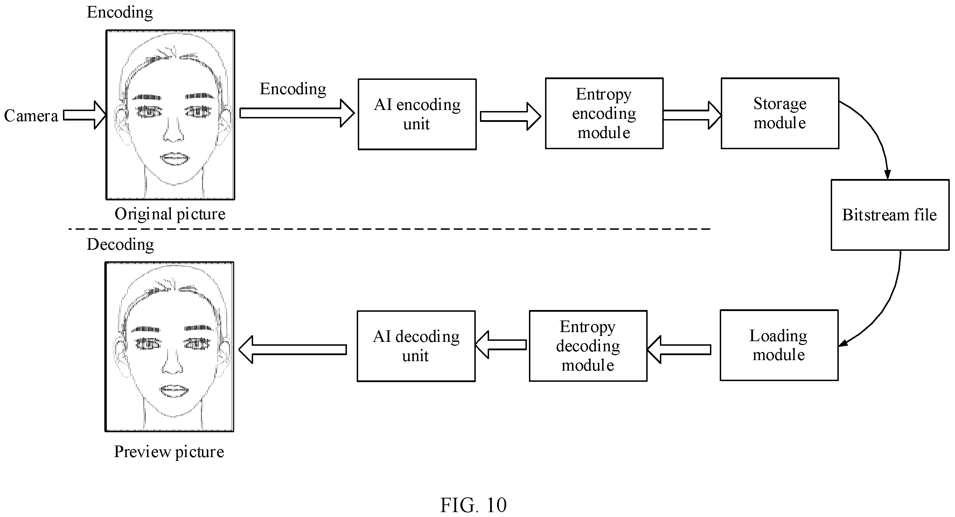

In some embodiments, for example, in a scenario of browsing a local album, a general process of implementing picture encoding and decoding based on the foregoing electronic device may be shown in FIG. 10. First, a picture is obtained by using an application such as a camera, and a corresponding side information bitstream and picture bitstream may be obtained after the picture is processed by an AI encoding unit and an entropy encoding module. The side information bitstream and the picture bitstream are stored by using a storage module. When detecting that a user needs to view or browse a corresponding picture, the electronic device may invoke, by using a loading module, a stored side information bitstream and picture bitstream of the corresponding picture, and decode the side information bitstream and the picture bitstream by using an entropy decoding module and an AI decoding unit, to obtain a corresponding preview picture.

In some other embodiments, the electronic device may further include a JPEG encoding module and a JPEG decoding module, which are respectively configured to compress and decompress a digital picture on a device side or a cloud side, to reduce a volume of data transmitted between a local side and the cloud side.

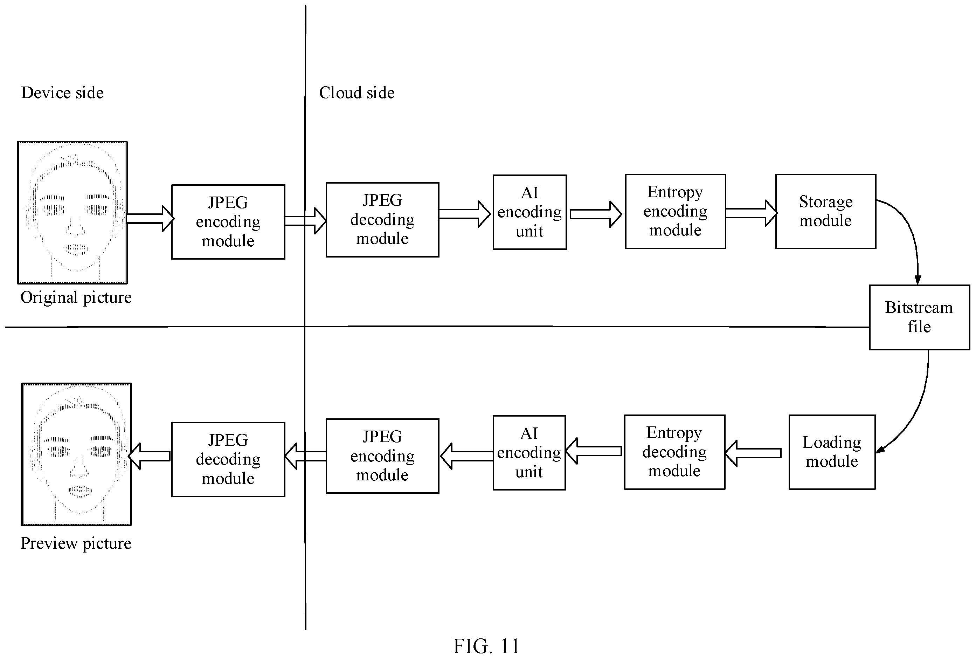

For example, in a device-cloud collaboration scenario, a general process of implementing picture encoding and decoding based on the foregoing electronic device may be shown in FIG. 11. The terminal electronic device first obtains a picture by using an application such as a camera, then compresses the picture by using the JPEG encoding module, and uploads a compressed picture to a cloud server. The picture is processed by a JPEG decoding module of the cloud server to obtain a decompressed picture, and then the decompressed picture is input into an AI encoding unit and an entropy encoding module for processing to obtain a corresponding side information bitstream and picture bitstream. The side information bitstream and the picture bitstream are stored by using a storage module. When detecting that a user needs to view or browse a corresponding picture, the cloud server may invoke, by using a loading module, a stored side information bitstream and picture bitstream of the corresponding picture, and decode the side information bitstream and the picture bitstream by using an entropy decoding module and an AI decoding unit, to obtain a corresponding preview picture. Then, the JPEG encoding module compresses the preview picture, and sends a compressed preview picture to the terminal electronic device. The terminal electronic device decompresses the compressed preview picture by using the JPEG decoding module, and then displays the preview picture.

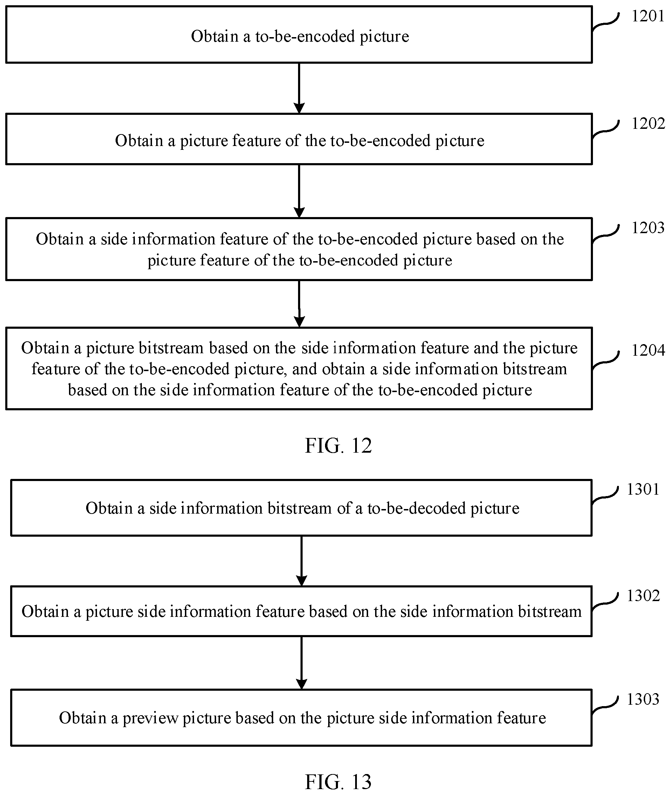

Based on the foregoing electronic device, the following describes in detail the encoding method and the decoding method provided in embodiments of this application. FIG. 12 is a schematic flowchart of an encoding method according to an embodiment of this application. As shown in FIG. 12, the encoding method may include the following steps.

1201: Obtain a to-be-encoded picture.

It may be understood that, in this embodiment of this application, the to-be-encoded picture may be any picture, for example, may be a picture obtained by using an application such as a camera. Alternatively, the to-be-encoded picture may be a picture stored in an electronic device or obtained from a cloud server.

1202: Obtain a picture feature of the to-be-encoded picture.

In this embodiment of this application, the electronic device may perform feature extraction on the to-be-encoded picture, to obtain the picture feature corresponding to the to-be-encoded picture.

It may be understood that the picture feature may be a feature map, that is, multidimensional data output by a convolutional layer, an activation layer, a pooling layer, a batch normalization layer, and the like in a convolutional neural network, and usually includes at least three dimensions: width (Width), height (Height), and channel (Channel).

It may be understood that, in this embodiment of this application, after the picture feature is obtained, the picture feature may be quantized, to obtain a quantized picture feature. In a subsequent process, encoding may be performed based on the quantized picture feature to obtain a picture bitstream.

1203: Obtain a side information feature of the to-be-encoded picture based on the picture feature of the to-be-encoded picture.

It may be understood that, in this embodiment of this application, the side information feature is also a feature map, and includes fewer feature elements than the picture feature. For example, the side information feature may be partial or approximate information of the picture feature that is obtained by transforming the picture feature by using a corresponding function. For example, the side information feature may be three-dimensional data that includes three dimensions: width (Width), height (Height), and channel (Channel).

1204: Obtain a picture bitstream based on the side information feature and the picture feature of the to-be-encoded picture, and obtain a side information bitstream based on the side information feature of the to-be-encoded picture.

It may be understood that the obtaining a picture bitstream based on the side information feature and the picture feature of the to-be-encoded picture includes: performing feature transform based on the side information feature of the to-be-encoded picture, to obtain distribution information of data in the picture feature; and performing entropy encoding on the picture feature based on distribution information of each piece of data in the picture feature, to obtain the picture bitstream, where the distribution information of each piece of data in the picture feature may be an average value and a variance for determining value distribution of the picture feature.

In some embodiments, the obtaining a side information bitstream based on the side information feature of the to-be-encoded picture includes:

estimating a probability of each piece of data in the side information feature based on preset distribution information, to obtain the probability of each piece of data in the side information feature; and encoding the side information feature based on the probability of each piece of data in the side information feature, to obtain the side information bitstream.

In this embodiment of this application, the electronic device may jointly store the side information bitstream and the picture bitstream or send the side information bitstream and the picture bitstream to a decoder side.

For example, in some embodiments, in a scenario of browsing a local album, encoding and decoding of a picture need to be implemented in a same electronic device. Specifically, the electronic device may jointly store a side information bitstream and a picture bitstream corresponding to the picture. When detecting that a user needs to view or browse a corresponding picture, the electronic device may invoke a stored side information bitstream and picture bitstream of the corresponding picture for decoding.

In some other embodiments, encoding and decoding of a picture may be implemented in different electronic devices. For example, in a picture transmission scenario, a transmitting-end electronic device may transmit, to a receiving-end electronic device, a side information bitstream and a picture bitstream corresponding to a picture. The receiving-end electronic device may decode the received side information bitstream and picture bitstream to obtain a corresponding preview picture.

It may be understood that, because a data volume of the side information bitstream is small, the side information feature is encoded to obtain the side information bitstream, so that a preview picture with low resolution can be quickly obtained based on the side information bitstream on a decoder side. During decoding, there is no need to obtain a thumbnail (or referred to as a preview picture) with low resolution through scaling after the original picture is obtained. This effectively avoids a case in which a preview picture cannot be obtained in a timely manner when a user browses a picture in the conventional technology.

In addition, the foregoing solution of coding based on the side information feature and the picture feature effectively reduces computing complexity compared with an iterative picture coding solution based on a recurrent neural network in the conventional technology.

Based on the foregoing electronic device, the following describes in detail the decoding method provided in embodiments of this application. FIG. 13 is a schematic flowchart of a decoding method according to an embodiment of this application. As shown in FIG. 13, the decoding method may include the following steps.

1301: Obtain a side information bitstream of a to-be-decoded picture.

1302: Obtain a picture side information feature based on the side information bitstream.

In this embodiment of this application, a probability corresponding to each piece of data in a picture feature may be obtained based on the side information bitstream, and entropy decoding may be performed on the side information bitstream based on the probability corresponding to each piece of data in the picture side information feature, to obtain the picture side information feature.

A manner of performing entropy decoding on the side information bitstream may include Huffman (Huffman) decoding, arithmetic decoding (arithmetic coding), and the like.

1303: Obtain a preview picture based on the picture side information feature.

It may be understood that the obtaining a preview picture based on the picture side information feature may include: obtaining an average value of data in the picture feature based on the picture side information feature, and obtaining the preview picture based on the average value of the data in the picture feature.

It may be understood that in this embodiment of this application, the data in the picture feature means each piece of data in all channels. Each channel may include h * w pieces of data.

It may be understood that, in the foregoing decoding solution, a decoder side may quickly obtain the preview picture based on the side information bitstream. This effectively avoids a case in which a preview picture cannot be obtained in a timely manner when a user browses a picture in the conventional technology.

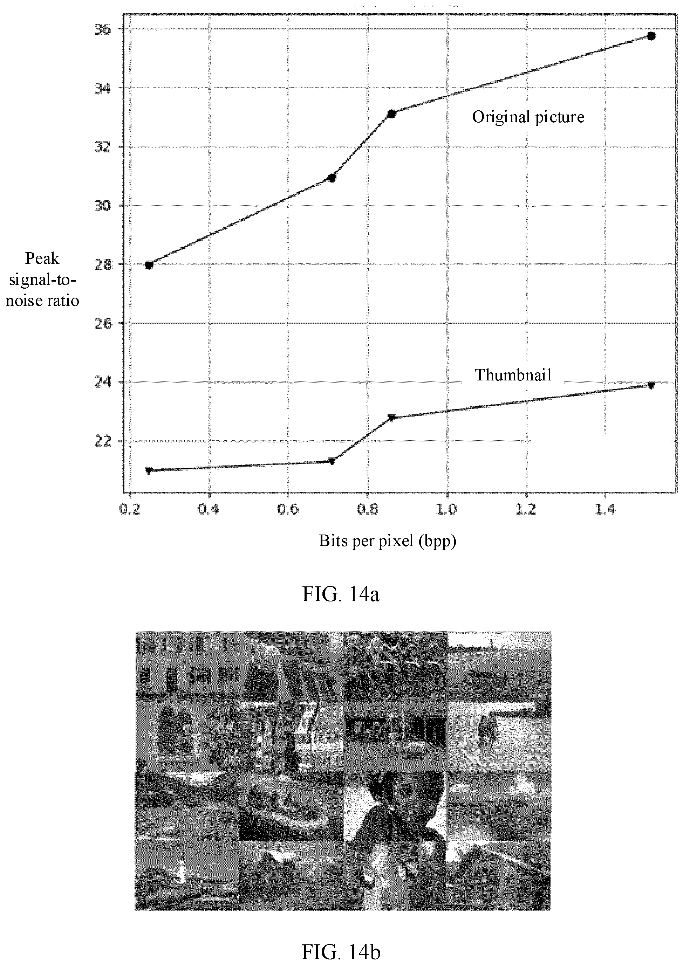

FIG. 14a shows an RD curve (a relationship curve between bits per pixel and picture quality) obtained by decoding 24 PNG pictures with resolution of 768x512 or 512x768 in a Kodak test set by using the solution shown in FIG. 13. It can be seen from the RD curve that the preview picture generated by using the side information bitstream in the solution can have picture quality over 20 dB in a bit rate segment of 0.2 to 1.5 bits per pixel (bits per pixel, bpp).

FIG. 14b shows a thumbnail list obtained by decoding 24 PNG pictures with resolution of 768x512 or 512x768 in a Kodak test set by using the solution shown in FIG. 13. It can be seen from both the thumbnail list and the RD curve that quality of a thumbnail generated by using a side information bitstream is high.

In addition, in a test environment in which a picture processor environment is Tesla V100 and a CPU environment is Intel(R) xeon(R) Gold6152, regular picture reconstruction of a single Kodak test picture consumes 560 ms, and generation of a thumbnail consumes 307 ms. From the perspective of the time consumed for generating the thumbnail, when a preview function is implemented by using the decoding solution shown in FIG. 13, time for generating a thumbnail of a picture, that is, time from starting decoding to displaying, is shortened by about 45% compared with time consumed for regular picture reconstruction.

In conclusion, it can be learned that a preview picture with high quality can be quickly obtained according to the decoding solution shown in FIG. 13 in this embodiment of this application.

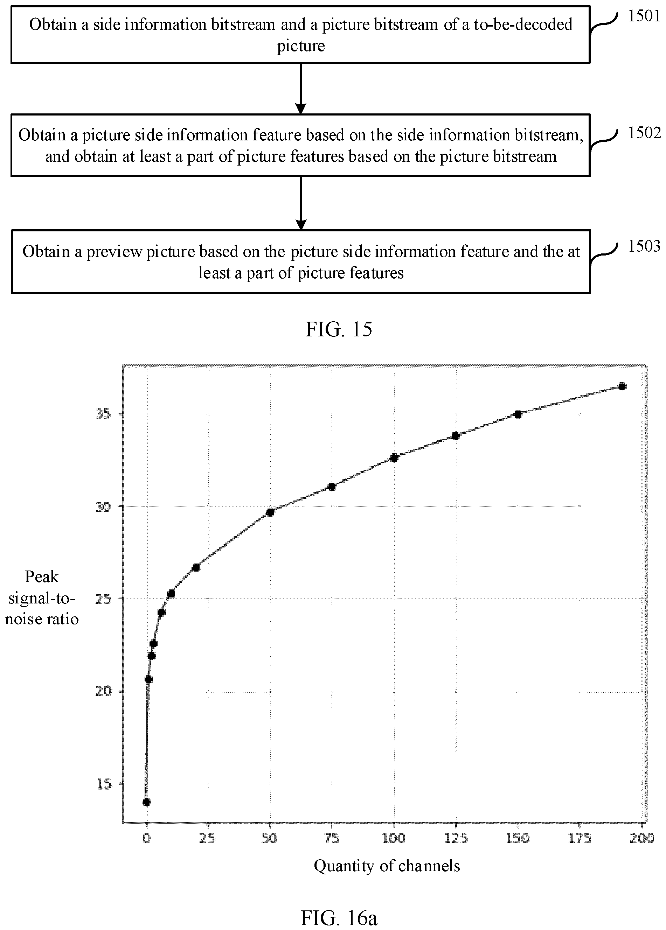

FIG. 15 is a schematic flowchart of a decoding method according to an embodiment of this application. As shown in FIG. 15, the decoding method may include the following steps.

1501: Obtain a side information bitstream and a picture bitstream of a to-be-decoded picture.

1502: Obtain a picture side information feature based on the side information bitstream, and obtain at least a part of picture features based on the picture bitstream.

In this embodiment of this application, a probability corresponding to each piece of data in the picture side information feature may be obtained based on the side information bitstream, and entropy decoding may be performed on the side information bitstream based on the probability corresponding to each piece of data in the picture side information feature, to obtain the picture side information feature.

It may be understood that in this embodiment of this application, the data in the picture feature means each piece of data in all channels. Each channel may include h * w pieces of data.

The probability corresponding to each piece of data in the picture feature in this embodiment of this application means an integral of a probability density function in a quantized interval of a value of each piece of data. It may be understood that, in some embodiments, the probability density function corresponding to each piece of data in the picture feature may be determined based on an average value and a variance of data, and the integral corresponding to the probability density function in the quantized interval of the value of each piece of data in the picture feature is used as the probability corresponding to each piece of data in the picture feature.

It may be understood that in this embodiment of this application, a manner of obtaining the picture feature may be: determining the average value and the variance of the data in the picture feature based on the picture side information feature; determining, based on the average value and the variance of the data in the picture feature, the probability corresponding to each piece of data in the picture feature; and obtaining the picture feature based on the picture bitstream and the probability corresponding to each piece of data in the picture feature.

In some embodiments, a part of picture features may be obtained based on the picture bitstream, so that a preview picture with high quality can be subsequently reconstructed based on the side information feature and the part of picture features, to facilitate previewing by a user. It may be understood that, the part of picture features may be decoded data obtained by decoding data of some channels with high output response importance in the picture bitstream.

Specifically, in some embodiments, the electronic device may sort channels in the picture feature in descending order of output response importance, to obtain a first sequence, and decode a specified quantity of top-ranked channels in the first sequence, to obtain first picture feature data. That is, a specified quantity of top-ranked channels with high output response importance in the channels in the picture feature are decoded, to obtain a part of corresponding picture features.

In some embodiments, the electronic device may sort channels in the picture feature in ascending order of output response importance, to obtain a first sequence, and decode a specified quantity of lower-ranked channels in the first sequence, to obtain first picture feature data.

In some embodiments, the electronic device may select a specified quantity of channels with high output response importance from the channels in the picture feature for decoding, to obtain the first picture feature data.

It may be understood that the quantity of channels for decoding may be set based on an actual requirement, for example, may be adjusted based on a quality requirement for a preview picture or a parsing speed requirement.

1503: Obtain a preview picture based on the picture side information feature and the at least a part of picture features.

In this embodiment of this application, the preview picture generated by decoding the side information bitstream to obtain the side information feature and performing reconstruction based on the side information feature and the part of picture features may be a preview picture with high quality.

Specifically, the obtaining a preview picture based on the picture side information feature and the at least a part of picture features may include: obtaining an average value of data in the picture feature based on the picture side information feature, and obtaining the preview picture based on the average value of the data in the picture feature and the at least a part of picture features.

It may be understood that, in the decoding solution shown in FIG. 15, the side information feature may be combined with picture features with different quantities of channels to obtain preview pictures with various quality, so as to meet various preview picture quality requirements.

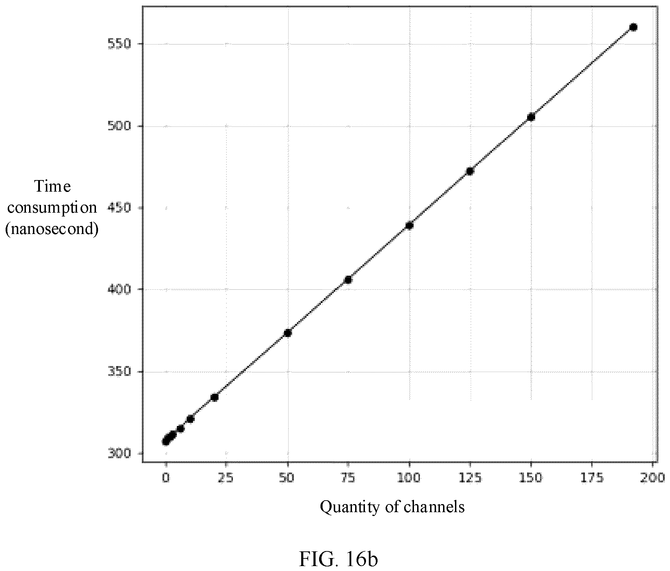

FIG. 16a is a diagram of a relationship curve between quality of a preview picture and a quantity of channels used for a picture feature measured in a Kodak test set. FIG. 16b is a diagram of a relationship curve between time consumption of preview picture generation and a quantity of channels used for a picture feature measured in a Kodak test set. It can be learned from FIG. 16a and FIG. 16b that a quick preview function can be implemented by using side information and a part of picture features. Compared with a solution in which a preview picture is generated by using only side information, a preview picture with higher quality can be generated by jointly using side information and a part of picture features. In addition, a larger quantity of channels in the picture feature indicates higher quality of the preview picture and longer time consumed for generating the preview picture.

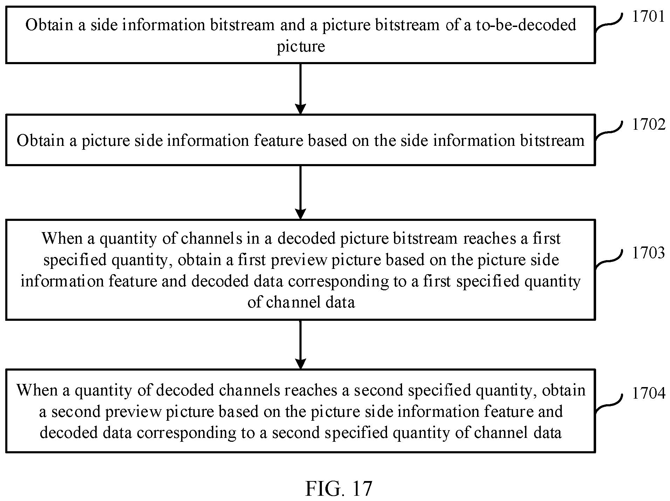

In some embodiments, in this application, the picture bitstream may be further decoded step by step (channel by channel), and a current preview picture is refreshed step by step based on a decoded picture feature and the side information feature. FIG. 17 is a schematic flowchart of a decoding method according to an embodiment of this application. As shown in FIG. 17, the decoding method may include the following steps.

1701: Obtain a side information bitstream and a picture bitstream of a to-be-decoded picture.

1702: Obtain a picture side information feature based on the side information bitstream.

In this embodiment of this application, a probability corresponding to each piece of data in the picture side information feature may be obtained based on the side information bitstream, and entropy decoding may be performed on the side information bitstream based on the probability corresponding to each piece of data in the picture side information feature, to obtain the picture side information feature.

It may be understood that data in a picture feature means each piece of data in all channels. Each channel may include h * w pieces of data.

1703: When a quantity of channels in a decoded picture bitstream reaches a first specified quantity, obtain a first preview picture based on the picture side information feature and decoded data corresponding to a first specified quantity of channel data.

It may be understood that in this embodiment of this application, a manner of decoding the picture bitstream may be: determining an average value and a variance of data in a picture feature based on the picture side information feature; determining, based on the average value and the variance of the data in the picture feature, the probability corresponding to each piece of data in the picture feature; and obtaining the picture feature based on the picture bitstream and the probability corresponding to each piece of data in the picture feature.

Specifically, in this embodiment of this application, channels in the picture bitstream may be sorted in descending order of output response importance, to obtain a first sequence, and data of the channels in the first sequence is successively decoded. That is, the channels in the picture bitstream are successively decoded in descending order of the output response importance of the channels.

1704: When a quantity of decoded channels reaches a second specified quantity, obtain a second preview picture based on the picture side information feature and decoded data corresponding to a second specified quantity of channel data.

In some embodiments, a 1st preview picture may be first obtained based on the side information feature, and then a current preview picture is refreshed step by step based on a decoded picture feature and the side information feature.

It may be understood that the foregoing describes a preview picture refresh process by using only the first preview picture and the second preview picture as an example. A quantity of refresh times is not limited in this application, that is, there may be a third preview picture, a fourth preview picture, or the like.

For example, as described above, the electronic device may first obtain a preview picture 1 based on the side information feature for preview, determine a first sequence based on output response importance of channels in the picture bitstream, and successively decode data of the channels. It is assumed that a channel order in the first sequence is channel 2-channel 3-channel 4-channel 1-channel 5. If the first specified quantity is 1, after the channel 2 is decoded, a preview picture 2 is obtained based on the side information feature and decoded data corresponding to the channel 2 to replace the preview picture 1. If the second specified quantity is 2, after the channel 2 and the channel 3 are decoded, a preview picture 3 is obtained based on the side information feature and decoded data corresponding to the channel 2 and the channel 3 to replace the preview picture 2.

Based on the decoding solution shown in FIG. 17, the current preview picture may be refreshed based on the decoded picture feature and the side information feature, so that the user can gradually see a preview picture with higher quality, thereby achieving progressive picture preview effect and improving user experience.

In this embodiment of this application, the picture decoding method may further include reconstructing a regular picture based on the picture feature. In this way, the user can view the original picture when the user performs an operation such as tapping the preview picture.

It may be understood that, after the user browses a plurality of preview pictures, when the user wants to view a reconstructed picture corresponding to any target preview picture, the user may view the original picture by performing an operation such as tapping the target preview picture.

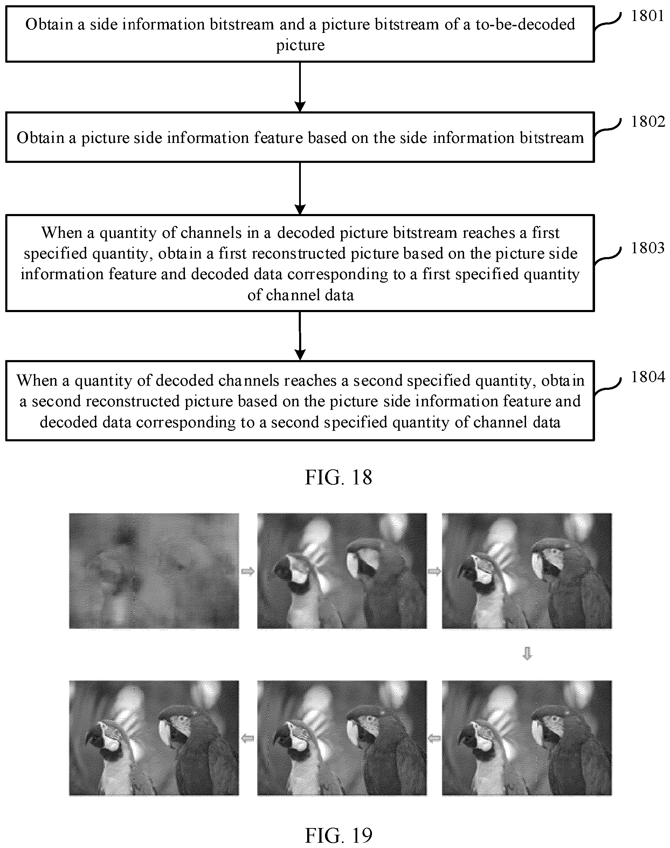

To avoid frame freezing when a user views a reconstructed picture, an embodiment of this application provides a decoding method. As shown in FIG. 18, the method includes the following steps.

1801: Obtain a side information bitstream and a picture bitstream of a to-be-decoded picture.

1802: Obtain a picture side information feature based on the side information bitstream.

In this embodiment of this application, a probability corresponding to each piece of data in the picture side information feature may be obtained based on the side information bitstream, and entropy decoding may be performed on the side information bitstream based on the probability corresponding to each piece of data in the picture side information feature, to obtain the picture side information feature.

1803: When a quantity of channels in a decoded picture bitstream reaches a first specified quantity, obtain a first reconstructed picture based on the picture side information feature and decoded data corresponding to a first specified quantity of channel data.

Specifically, it may be understood that in this embodiment of this application, a manner of decoding the picture bitstream may be: determining an average value and a variance of data in a picture feature based on the picture side information feature; determining, based on the average value and the variance of the data in the picture feature, the probability corresponding to each piece of data in the picture feature; and obtaining the picture feature based on the picture bitstream and the probability corresponding to each piece of data in the picture feature.

In this embodiment of this application, channels in the picture bitstream may be sorted in descending order of output response importance, to obtain a first sequence, and data of the channels in the first sequence is successively decoded. That is, the channels in the picture bitstream are successively decoded in descending order of the output response importance of the channels.

1804: When a quantity of decoded channels reaches a second specified quantity, obtain a second reconstructed picture based on the picture side information feature and decoded data corresponding to a second specified quantity of channel data.

1805: After all channels are decoded, obtain a final reconstructed picture based on the side information feature and decoded data corresponding to all channel data.

In this way, reconstructed pictures with different quality can be gradually presented, to achieve progressive decoding effect, so that when a user views an original picture, frame freezing is avoided, and user experience is improved.

It may be understood that the foregoing describes an original picture refresh process by using only the first reconstructed picture and the second reconstructed picture as an example. A quantity of refresh times is not limited in this application, that is, there may be a third reconstructed picture, a fourth reconstructed picture, or the like.

FIG. 19 is a diagram of progressive reconstructed pictures obtained by decoding a PNG picture with resolution of 768x512 in a Kodak test set by using the solution shown in FIG. 18. It can be learned from the figure that quality of the reconstructed picture gradually increases, and progressive decoding effect is achieved.

The following briefly describes a hardware structure of an electronic device in this application by using a mobile phone 10 as an example.

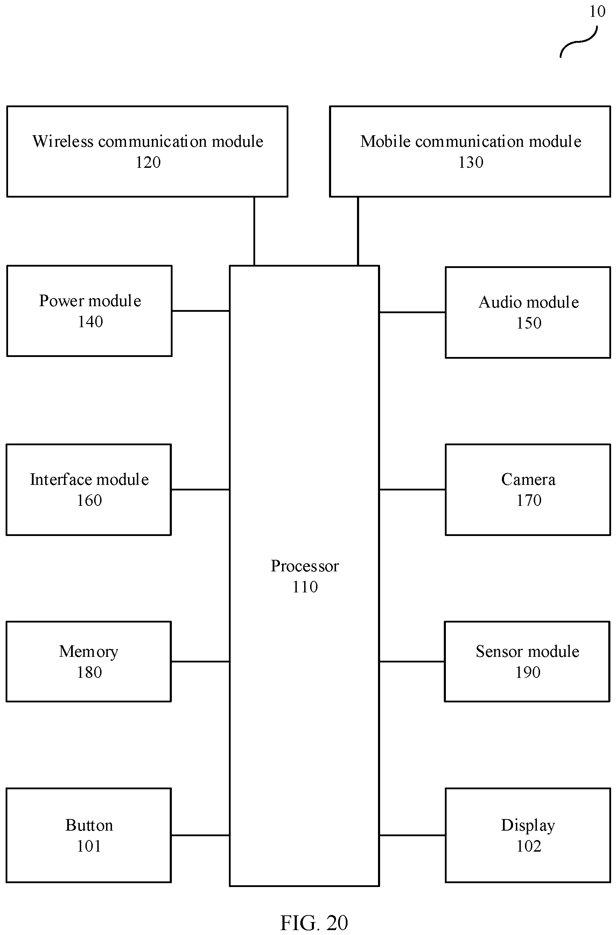

As shown in FIG. 20, the mobile phone 10 may include a processor 110, a power module 140, a memory 180, a mobile communication module 130, a wireless communication module 120, a sensor module 190, an audio module 150, a camera 170, an interface module 160, a button 101, a display 102, and the like.

It may be understood that the structure shown in this embodiment of the present invention does not constitute a specific limitation on the mobile phone 10. In some other embodiments of this application, the mobile phone 10 may include more or fewer components than those shown in the figure, or combine some components, or split some components, or have different component arrangements. The components shown in the figure may be implemented by hardware, software, or a combination of software and hardware.

The processor 110 may include one or more processing units, for example, may include a processing module or a processing circuit of a central processing unit (Central Processing Unit, CPU), a graphics processing unit (Graphics Processing Unit, GPU), a digital signal processor DSP, a micro-programmed control unit (Micro-programmed Control Unit, MCU), an artificial intelligence (Artificial Intelligence, AI) processor, a field programmable gate array (Field Programmable Gate Array, FPGA), or the like. Different processing units may be independent components, or may be integrated into one or more processors. A storage unit may be disposed in the processor 110, to store instructions and data. In some embodiments, the storage unit in the processor 110 is a cache 180.

It may be understood that the foregoing encoding and decoding methods in this application may be performed by the processor 110.

The power module 140 may include a power supply, a power management component, and the like. The power supply may be a battery. The power management component is configured to manage charging of the power supply and power supplying of the power supply to another module. In some embodiments, the power management component includes a charging management module and a power management module. The charging management module is configured to receive charging input from a charger. The power management module is configured to connect to the power supply, the charging management module, and the processor 110. The power management module receives input from the power supply and/or the charging management module, and supplies power to the processor 110, the display 102, the camera 170, the wireless communication module 120, and the like.

The mobile communication module 130 may include but is not limited to an antenna, a power amplifier, a filter, an LNA (Low noise amplify, low noise amplifier), and the like. The mobile communication module 130 may provide a wireless communication solution that is applied to the mobile phone 10 and that includes 2G/3G/4G/5G and the like. The mobile communication module 130 may receive an electromagnetic wave by using the antenna, perform processing such as filtering and amplification on the received electromagnetic wave, and send a processed electromagnetic wave to the modem processor for demodulation. The mobile communication module 130 may further amplify a signal modulated by the modem processor, and convert the signal into an electromagnetic wave for radiation through the antenna. In some embodiments, at least some functional modules of the mobile communication module 130 may be disposed in the processor 110. In some embodiments, at least some functional modules of the mobile communication module 130 may be disposed in a same component as at least some modules of the processor 110.

The wireless communication module 120 may include an antenna, and receive/send an electromagnetic wave through the antenna. The wireless communication module 120 may provide a wireless communication solution that is applied to the mobile phone 10 and that includes a wireless local area network (wireless local area networks, WLAN) (such as a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The mobile phone 10 may communicate with a network and another device by using the wireless communication technology.

In some embodiments, the mobile communication module 130 and the wireless communication module 120 that are of the mobile phone 10 may be alternatively located in a same module.

The display 102 is configured to display a man-machine interaction interface, an image, a video, and the like. The display 102 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diodes, QLED), or the like.

The sensor module 190 may include an optical proximity sensor, a pressure sensor, a gyroscope sensor, a barometric pressure sensor, a magnetic sensor, an acceleration sensor, a distance sensor, a fingerprint sensor, a temperature sensor, a touch sensor, an ambient light sensor, a bone conduction sensor, and the like.

The audio module 150 is configured to convert digital audio information into an analog audio signal for output, or convert an analog audio input into a digital audio signal. The audio module 150 may be further configured to encode and decode audio signals. In some embodiments, the audio module 150 may be disposed in the processor 110, or some functional modules of the audio module 150 may be disposed in the processor 110. In some embodiments, the audio module 150 may include a speaker, an earpiece, a microphone, and a headset jack.

The camera 170 is configured to capture a still image or a video. An optical image of an object is generated by using a lens and projected onto a photosensitive element. The photosensitive element converts an optical signal into an electrical signal, and then transmits the electrical signal to an ISP (Image Signal Processing, image signal processor) for conversion into a digital image signal. The mobile phone 10 may implement an image shooting function by using the ISP, the camera 170, a video codec, the GPU (Graphic Processing Unit, graphics processing unit), the display 102, an application processor, and the like.

The interface module 160 includes an external memory interface, a universal serial bus (universal serial bus, USB) interface, a subscriber identification module (subscriber identification module, SIM) card interface, and the like. The external memory interface may be configured to connect to an external memory card, for example, a micro SD card, to expand a storage capability of the mobile phone 10. The external memory card communicates with the processor 110 by using the external memory interface, to implement a data storage function. The universal serial bus interface is used for communication between the mobile phone 10 and another electronic device. The subscriber identification module card interface is configured to communicate with a SIM card installed in the mobile phone 1010, for example, read a phone number stored in the SIM card, or write a phone number into the SIM card.

In some embodiments, the mobile phone 10 further includes the button 101, a motor, an indicator, and the like. The button 101 may include a volume button, a power-on/power-off button, and the like. The motor is configured to enable the mobile phone 10 to generate vibration effect, for example, generate vibration when the mobile phone 10 of a user is called, to prompt the user to answer an incoming call of the mobile phone 10. The indicator may include a laser indicator, a radio frequency indicator, an LED indicator, or the like.

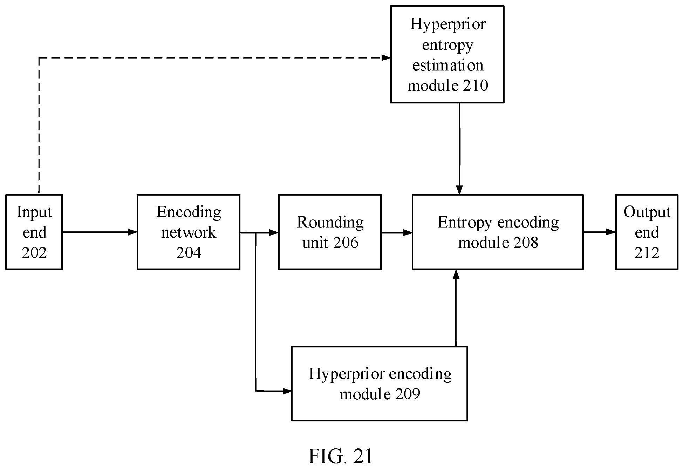

FIG. 21 is a block diagram of an example of an encoding apparatus 20 for implementing a technology in this application. In the example of FIG. 21, the encoding apparatus 20 includes an input end (or an input interface) 202, an encoding network 204, a rounding unit 206, an entropy encoding module 208, a hyperprior encoding module 209, a hyperprior entropy estimation module 210, and an output end (or an output interface) 212. The encoding apparatus 20 shown in FIG. 21 may also be referred to as an end-to-end encoding apparatus 20.

The encoding apparatus 20 may be configured to receive a to-be-encoded picture through the input end 202 or the like. The received to-be-encoded picture or to-be-encoded picture data may alternatively be a preprocessed to-be-encoded picture (or preprocessed to-be-encoded picture data). For simplicity, the following description uses the to-be-encoded picture.

A (digital) picture is or may be considered as a two-dimensional array or matrix including samples with intensity values. A sample in the array may also be referred to as a pixel (pixel or pel) (short form of a picture element). Quantities of samples in horizontal and vertical directions (or axes) of the array or picture define a size and/or resolution of the picture. For representation of color, three color components are usually employed, to be specific, the picture may be represented as or include three sample arrays. In RBG format or color space, a picture includes a corresponding red, green and blue sample array. However, in video or picture coding, each pixel is usually represented in a luminance/chrominance format or color space, for example, YCbCr, which includes a luminance component indicated by Y (sometimes indicated by L) and two chrominance components indicated by Cb and Cr. The luminance (luma) component Y represents brightness or gray level intensity (which are, for example, the same in a gray-scale picture), while the two chrominance (chrominance, chroma for short) components Cb and Cr represent chrominance or color information components. Accordingly, a picture in YCbCr format includes a luminance sample array of luminance sample values (Y) and two chrominance sample arrays of chrominance values (Cb and Cr). A picture in RGB format may be converted or transformed into YCbCr format and vice versa, and this process is also referred to as color transformation or conversion. If a picture is monochrome, the picture may include only a luminance sample array. Accordingly, a picture may be, for example, an array of luminance samples in monochrome format or an array of luminance samples and two corresponding arrays of chrominance samples in 4:2:0, 4:2:2, and 4:4:4 color format.

In a possibility, an embodiment of the encoding apparatus 20 may include a picture partitioning unit configured to partition a picture into a plurality of (usually non-overlapping) picture blocks. These blocks may also be referred to as root blocks, macroblocks (H.264/AVC), coding tree blocks (Coding Tree Block, CTB), or coding tree units (Coding Tree Unit, CTU) in the H.265/HEVC and VVC standards. The partitioning unit may be configured to use a same block size for all pictures in a video sequence and use a corresponding grid defining the block size, or change the block size between pictures or picture subsets or picture groups, and partition each picture into corresponding blocks.

In another possibility, the encoding apparatus may be configured to directly receive a picture block of a to-be-encoded picture, for example, one, several, or all blocks forming the to-be-encoded picture. The picture block may also be referred to as a current picture block or a to-be-encoded picture block.

Like the picture, the picture block is also or may also be considered as a two-dimensional array or matrix including samples with intensity values (sample values), although of a smaller dimension than the picture. In other words, the picture block may include one sample array (for example, a luminance array in case of a monochrome picture, or a luminance or chrominance array in case of a color picture) or three sample arrays (for example, one luminance array and two chrominance arrays in case of a color picture) or any other quantity and/or type of arrays depending on a color format used. Quantities of samples in horizontal and vertical directions (or axes) of the picture block define a size of the block. Accordingly, a block may be an M×N (M columns×N rows) array of samples, an M×N array of transform coefficients, or the like.

In another possibility, the encoding apparatus 20 shown in FIG. 21 is configured to encode a picture block by block, for example, perform encoding, rounding, and entropy encoding on each picture block.

In another possibility, the encoding apparatus 20 shown in FIG. 21 is configured to encode a picture, for example, perform encoding, quantization, and entropy encoding on the picture.

In another possibility, the encoding apparatus 20 shown in FIG. 21 is configured to encode audio data, for example, perform encoding, quantization, and entropy encoding on the audio data.

In another possibility, the encoding apparatus 20 shown in FIG. 21 may be further configured to partition an encoded picture by using a slice (also referred to as a video slice), where the picture may be partitioned or encoded by using one or more slices (usually non-overlapping). Each slice may include one or more blocks (for example, coding tree units CTUs) or one or more block groups (for example, tiles (tile) in the H.265/HEVC/VVC standard and subpictures (subpicture) in the VVC standard).

In another possibility, the encoding apparatus 20 shown in FIG. 21 may be further configured to partition an audio by using a segment, where the audio may be partitioned or encoded by using one or more segments (usually non-overlapping).

In another possibility, the encoding apparatus 20 shown in FIG. 21 may be further configured to partition and/or encode a picture by using a slice/tile group (also referred to as a video tile group) and/or a tile (also referred to as video tile), where the picture may be partitioned or encoded by using one or more slices/tile groups (usually non-overlapping), and each slice/tile group may include one or more blocks (for example, CTUs) or one or more tiles. Each tile may be rectangular or the like and may include one or more complete or fractional blocks (for example, CTUs).

Encoding network 204

As shown in FIG. 21, the encoding network 204 is configured to obtain an output feature map 205 of each feature layer based on input data by using the encoding network. An output of an encoding network unit is greater than or equal to at least two output feature maps corresponding to two feature layers.

In a possibility, the encoding network includes K encoding sub-networks, and each encoding sub-network corresponds to a feature layer at which the encoding sub-network is located and a corresponding output feature map. In this case, K output feature maps are output, where K is greater than or equal to 2.

In a possibility, an input of the encoding network is a to-be-encoded picture or a to-be-encoded picture block.

In a possibility, the encoding network unit includes T network layers. M, L, T, and K are positive integers. Both an $M^{th}$ output feature map and a $K^{th}$ output feature map are outputs of the encoding network, the $K^{th}$ output feature map output by the encoding network is output after a network layer L of the encoding network unit, and the $M^{th}$ output feature map is output after a network layer T. It may be understood that a plurality of output feature maps may be output at different network layers in the encoding network unit. This is not limited herein.

It may be understood that, in embodiments of this application, the encoding network may be a feature extraction module configured to extract a picture feature in embodiments of this application.

Rounding unit 206

The rounding unit 206 is configured to round the output feature map 205 through, for example, scalar quantization or vector quantization, to obtain a rounded feature map.

Entropy encoding module 208

The entropy encoding module 208 is configured to apply an entropy encoding algorithm or solution (for example, a variable length coding (variable length coding, VLC) solution, a context-adaptive VLC (context adaptive VLC, CALVC) solution, an arithmetic coding solution, a binarization algorithm, context-adaptive binary arithmetic coding (context adaptive binary arithmetic coding, CABAC), syntax-based context-adaptive binary arithmetic coding (syntax-based context-adaptive binary arithmetic coding, SBAC), probability interval partitioning entropy (probability interval partitioning entropy, PIPE) coding, or another entropy coding method or technology) to rounded feature graphs in at least two feature layers, to obtain encoded picture data that can be output through the output end 212 in a form of an encoded bitstream or the like.

In a possibility, because a real character probability of a rounded feature map is not known in entropy encoding, such information or related information may be collected as needed, and added to the entropy encoding module. The information may be transmitted to a decoder side.

The hyperprior encoding module 209 is configured to obtain a side information feature of the to-be-encoded picture based on a picture feature of the to-be-encoded picture.

Hyperprior entropy estimation module 210

The hyperprior entropy estimation module 210 is configured to perform probability estimation on a rounded feature map, to implement bit rate estimation for model compression. A dashed-line input is optional. The hyperprior entropy estimation module corresponds to N entropy estimation modules corresponding to N feature layers.

The hyperprior entropy estimation module 210 corresponds to N entropy estimation modules corresponding to N feature layers and a lossless entropy estimation module corresponding to a residual layer.

In a possibility, the hyperprior entropy estimation module 210 is a convolutional network, and the convolutional network includes a convolutional layer and a nonlinear activation layer.

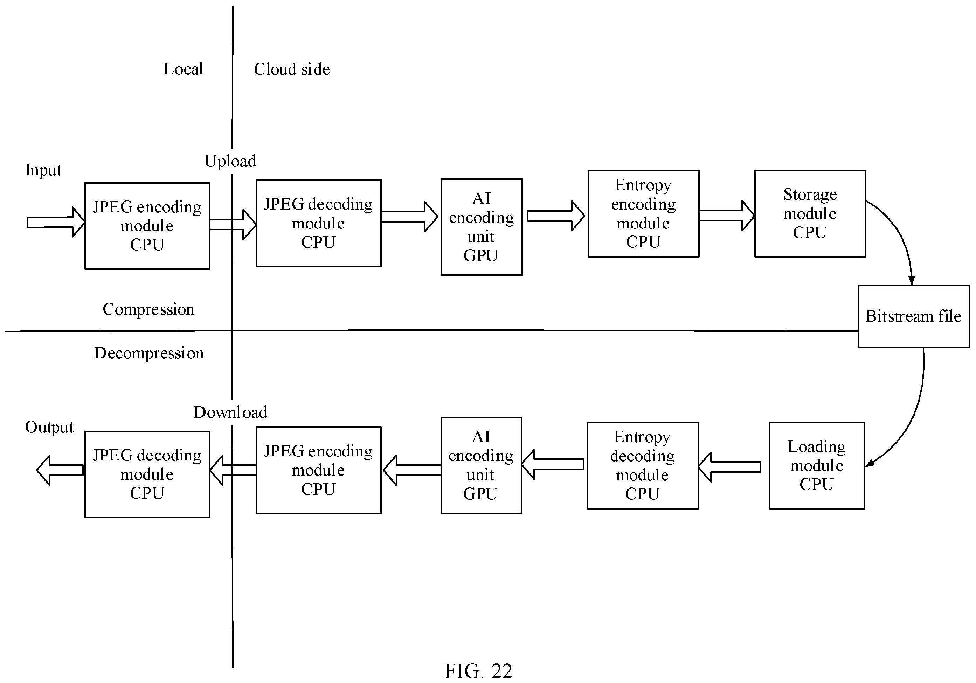

In an embodiment, FIG. 22 shows a system architecture in a possible scenario. This embodiment shows a diagram of a structure of a cloud application device, and includes the following.

JPEG encoding/decoding modules on a local side and a cloud side are configured to compress/decompress a digital picture on a device side or the cloud side, to reduce a volume of data transmitted between the local side and the cloud side.

An AI encoding unit is configured to transform a picture into an output feature with lower redundancy, and generate a probability estimation of each point in the output feature. The AI encoding unit includes a feature extraction module, a hyperprior encoding module, a hyperprior decoding module, and a hyperprior entropy estimation module. An AI decoding unit is configured to perform inverse transform on an output feature, to parse the output feature into a picture. The AI decoding unit may include a hyperprior decoding module, a hyperprior entropy estimation module, a pre-decoding module, and a decoding module.

An entropy encoding/decoding module (using arithmetic coding as an example) is configured to reduce encoding redundancy of an output feature, to further reduce a volume of data transmitted in a picture compression process.

A storage module is configured to store a data file such as a picture bitstream or a side information bitstream generated by the entropy encoding (using arithmetic coding as an example) module at a corresponding storage location on the cloud side.

A loading module is configured to load the data file from the corresponding storage location on the cloud side, and input the data file to the entropy decoding module.

An embodiment of this application provides a coding apparatus. The coding apparatus is an encoding apparatus or a decoding apparatus, and the coding apparatus includes: one or more processors and a memory, where the memory is configured to store program instructions, and when the program instructions are executed by the one or more processors, the foregoing picture encoding method or picture decoding method is implemented.

An embodiment of this application provides a readable storage medium. The readable medium stores instructions. When the instructions are executed on an electronic device, a machine is enabled to perform the foregoing picture encoding method or picture decoding method.

An embodiment of this application provides a computer program product, including instructions. When the instructions are executed on an electronic device, a machine is enabled to perform the foregoing picture encoding method or picture decoding method.

An embodiment of this application provides a computer-readable storage medium. The computer-readable storage medium stores a picture bitstream and a side information bitstream obtained in the encoding method in embodiments of this application that is performed by one or more processors.

An embodiment of this application provides a decoding apparatus, including a memory and a decoder. The memory is configured to store a picture bitstream and a side information bitstream. The decoder is configured to perform a picture decoding method.

An embodiment of this application provides an artificial intelligence neural network coding architecture, including a coding network and a hyperprior coding network. The coding network includes an encoding neural network, a first entropy encoder, a first entropy decoder, and a decoding neural network. The hyperprior coding network includes a hyperprior encoding neural network, a second entropy encoder, a second entropy decoder, and a pre-decoding neural network. A to-be-encoded picture is processed by using the encoding neural network, to obtain a first picture feature set of the to-be-encoded picture. Feature extraction is performed on the first picture feature set by using the hyperprior encoding neural network, to obtain a side information feature. Entropy encoding is performed on the first picture feature set by using the first entropy encoder, to obtain a picture bitstream. Entropy encoding is performed on the side information feature by using the second entropy encoder, to obtain a side information bitstream. Entropy decoding is performed on the side information bitstream by using the second entropy decoder, to obtain an entropy decoding result corresponding to the side information feature. The entropy decoding result corresponding to the side information feature is processed by using the pre-decoding neural network, to obtain a preview picture of the to-be-encoded picture. Entropy decoding is performed on the picture bitstream by using the first entropy decoder, to obtain an entropy decoding result corresponding to the picture bitstream. The entropy decoding result corresponding to the picture bitstream is processed by using the decoding neural network, to obtain a reconstructed picture of the to-be-encoded picture.

It may be understood that, the hyperprior coding network further includes a hyperprior decoding neural network. The entropy decoding result corresponding to the side information feature is processed by using the hyperprior decoding neural network, to obtain a reconstructed feature of the side information feature. The reconstructed feature of the side information feature is processed by using the pre-decoding neural network, to obtain a preview picture of the to-be-encoded picture.

An embodiment of this application provides an artificial intelligence neural network decoding architecture, including a coding network and a hyperprior coding network. The coding network includes a first entropy decoder and a decoding neural network. The hyperprior coding network includes a second entropy decoder and a pre-decoding neural network. The second entropy decoder is used to obtain a side information bitstream of a to-be-decoded picture, and perform entropy decoding on the side information bitstream, to obtain an entropy decoding result corresponding to a side information feature. The entropy decoding result corresponding to the side information feature is processed by using the pre-decoding neural network to obtain a first preview picture of the to-be-decoded picture. The first entropy decoder is used to obtain a picture bitstream of the to-be-decoded picture, and perform entropy decoding on the picture bitstream, to obtain an entropy decoding result corresponding to the picture bitstream. The entropy decoding result corresponding to the picture bitstream is processed by using the decoding neural network to obtain a reconstructed picture of the to-be-decoded picture.

An embodiment of this application provides an artificial intelligence neural network encoding architecture, including a coding network and a hyperprior coding network. The coding network includes an encoding neural network and a first entropy encoder. The hyperprior coding network includes a hyperprior encoding neural network and a second entropy encoder. A to-be-encoded picture is processed by using the encoding neural network, to obtain a first picture feature set of the to-be-encoded picture. Feature extraction is performed on the first picture feature set by using the hyperprior encoding neural network, to obtain a side information feature. Entropy encoding is performed on the first picture feature set by using the first entropy encoder, to obtain a picture bitstream. Entropy encoding is performed on the side information feature by using the second entropy encoder, to obtain a side information bitstream.

An embodiment of this application provides an artificial intelligence neural network decoding architecture, including a coding network and a hyperprior coding network. The coding network includes a first entropy decoder and a decoding neural network. The hyperprior coding network includes a second entropy decoder and a pre-decoding neural network. The second entropy decoder is used to obtain a side information bitstream of a to-be-decoded picture, and perform entropy decoding on the side information bitstream, to obtain an entropy decoding result corresponding to a side information feature.

The first entropy decoder is used to obtain a picture bitstream of the to-be-decoded picture, and decode a first specified quantity of channel data in the picture bitstream, to obtain first decoded data. The pre-decoding neural network is used to process the entropy decoding result corresponding to the side information feature and the first decoded data, to obtain a second preview picture of the to-be-decoded picture.

An embodiment of this application provides an artificial intelligence neural network decoding architecture, including a coding network and a hyperprior coding network. The coding network includes a first entropy decoder and a decoding neural network. The hyperprior coding network includes a second entropy decoder and a pre-decoding neural network. The second entropy decoder is used to obtain a side information bitstream of a to-be-decoded picture, and perform entropy decoding on the side information bitstream, to obtain an entropy decoding result corresponding to a side information feature.

The first entropy decoder is used to obtain a picture bitstream of the to-be-decoded picture, and decode a second specified quantity of channel data in the picture bitstream, to obtain second decoded data. The pre-decoding neural network is used to process the entropy decoding result corresponding to the side information feature and the second decoded data, to obtain a third preview picture of the to-be-decoded picture. The first entropy decoder is used to decode a third specified quantity of channel data in the picture bitstream, to obtain third decoded data. The pre-decoding neural network is used to process the entropy decoding result corresponding to the side information feature and the third decoded data, to obtain a third preview picture of the to-be-decoded picture.

An embodiment of this application provides an artificial intelligence neural network decoding architecture, including a coding network and a hyperprior coding network. The coding network includes a first entropy decoder and a decoding neural network. The hyperprior coding network includes a second entropy decoder and a pre-decoding neural network. The second entropy decoder is used to obtain a side information bitstream of a to-be-decoded picture, and perform entropy decoding on the side information bitstream, to obtain an entropy decoding result corresponding to a side information feature. The entropy decoding result corresponding to the side information feature is processed by using the pre-decoding neural network to obtain a preview picture of the to-be-decoded picture. The first entropy decoder is used to obtain a picture bitstream of the to-be-decoded picture, and decode a first specified quantity of channel data in the picture bitstream, to obtain first decoded data. The entropy decoding result corresponding to the side information feature and the first decoded data are processed by using the decoding neural network, to obtain a first reconstructed picture of the to-be-decoded picture. A first specified quantity of channel data in the picture bitstream is decoded by using the first entropy decoder, to obtain second decoded data. The entropy decoding result corresponding to the side information feature and the second decoded data are processed by using the decoding neural network, to obtain a second reconstructed picture of the to-be-decoded picture.

Embodiments disclosed in this application may be implemented in hardware, software, firmware, or a combination of these implementation methods. Embodiments of this application may be implemented as a computer program or program code that is executed on a programmable system, and the programmable system includes at least one processor, a storage system (including volatile and non-volatile memories and/or a storage element), at least one input device, and at least one output device.

The program code may be applied to input instructions, to perform functions described in this application and generate output information. The output information may be used in one or more output devices in a known manner. For a purpose of this application, a processing system includes any system with a processor such as a digital signal processor (DSP), a microcontroller, an application-specific integrated circuit (ASIC), or a microprocessor.

The program code may be implemented by using a high-level programming language or an object-oriented programming language, to communicate with the processing system. The program code can also be implemented in an assembly language or a machine language when needed. Actually, the mechanism described in this application is not limited to a scope of any particular programming language. In any case, the language may be a compiled language or an interpreted language.

In some cases, the disclosed embodiments may be implemented in hardware, firmware, software, or any combination thereof. The disclosed embodiments may alternatively be implemented as instructions that are carried or stored on one or more transitory or non-transitory machine-readable (for example, computer-readable) storage media and that can be read and executed by one or more processors. For example, the instructions may be distributed by using a network or another computer-readable medium. Therefore, the machine-readable medium may include any mechanism for storing or transmitting information in a machine (for example, a computer)-readable form, including but not limited to a floppy disk, a compact disc, an optical disc, a read-only memory (CD-ROMs), a magnetic optical disk, a read-only memory (ROM), a random access memory (RAM), an erasable programmable read-only memory (EPROM), an electrically erasable programmable read-only memory (EEPROM), a magnetic card, an optical card, a flash memory, or a tangible machine-readable memory used to transmit information (for example, a carrier, an infrared signal, or a digital signal) by using a propagating signal in an electrical, optical, acoustic, or another form over the internet. Therefore, the machine-readable medium includes any type of machine-readable medium suitable for storing or transmitting electronic instructions or information in a machine (for example, a computer)-readable form.

In the accompanying drawings, some structural or method features may be shown in a particular arrangement and/or order. However, it should be understood that such a particular arrangement and/or order may not be required. In some embodiments, these features may be arranged in a manner and/or order different from those/that shown in the descriptive accompanying drawings. In addition, including structural or method features in a particular diagram does not imply that such features are needed in all embodiments, and in some embodiments, these features may not be included or may be combined with other features.

It should be noted that all units/modules mentioned in the device embodiments of this application are logical units/modules. Physically, one logical unit/module may be one physical unit/module, or may be a part of one physical unit/module, or may be a combination of a plurality of physical units/modules. Physical implementations of these logical units/modules are not the most important, but a combination of functions implemented by these logical units/modules is a key to resolving the technical problem in this application. In addition, to highlight the innovative part of this application, the foregoing device embodiments of this application do not introduce units/modules that are not closely related to resolving the technical problem in this application. This does not indicate that the foregoing device embodiments do not have other units/modules.

It should be noted that in the example and specification of this patent, relational terms such as first and second are only used to distinguish one entity or operation from another, and do not necessarily require or imply that any actual relationship or sequence exists between these entities or operations. Moreover, the term "include" or any other variant thereof is intended to cover a non-exclusive inclusion, so that a process, a method, an article, or a device that includes a list of elements not only includes those elements but also includes other elements that are not expressly listed, or further includes elements inherent to such a process, method, article, or device. In a case without more restrictions, for an element limited by the statement "include a", a process, method, article, or device that includes the element may further include another same element.

Although this application has been illustrated and described with reference to some preferred embodiments of this application, a person of ordinary skill in the art should understand that various changes may be made to this application in form and detail without departing from the scope of this application.

**Claims**

1. A picture decoding method, comprising:

   obtaining a side information bitstream of a to-be-decoded picture;
   obtaining a picture side information feature based on the side information bitstream, wherein the picture side information feature is a second picture feature set obtained by performing, based on a hyperprior encoding neural network, feature extraction on a first picture feature set corresponding to the to-be-decoded picture, a data volume of the second picture feature set is less than a data volume of the first picture feature set, the hyperprior encoding neural network is obtained through training constraint based on a bit rate loss, a reconstructed picture distortion loss, and a preview picture distortion loss, and the preview picture distortion loss represents a similarity difference between an original training picture and a preview picture of the original training picture; and
   obtaining a preview picture of the to-be-decoded picture based on the picture side information feature.

2. The method according to claim 1, wherein the obtaining a preview picture of the to-be-decoded picture based on the picture side information feature comprises:
   obtaining a first preview picture of the to-be-decoded picture based on the picture side information feature.

3. The method according to claim 2, wherein the method further comprises:

   obtaining a picture bitstream of the to-be-decoded picture, wherein the picture bitstream comprises data of a plurality of channels of the to-be-decoded picture; and
   obtaining first decoded data based on the picture bitstream, wherein the first decoded data is at least a part of picture features in the first picture feature set; and correspondingly,
   the obtaining a preview picture of the to-be-decoded picture based on the picture side information feature comprises:

obtaining a second preview picture based on the picture side information feature and the first decoded data, wherein a similarity between the second preview picture and the to-be-decoded picture is greater than a similarity between the first preview picture and the to-be-decoded picture.

4. The method according to claim 3, wherein the obtaining first decoded data based on the picture bitstream comprises:

determining data of at least one channel in the picture bitstream; and
decoding the data of the at least one channel to obtain the first decoded data.

5. The method according to claim 4, wherein the determining data of at least one channel in the picture bitstream comprises:
obtaining the data of the at least one channel based on a data volume of data of each channel in the picture bitstream.

6. The method according to claim 1, wherein the method further comprises: obtaining a picture bitstream of the to-be-decoded picture, wherein the picture bitstream comprises data of a plurality of channels of the to-be-decoded picture; and correspondingly, the obtaining a preview picture of the to-be-decoded picture based on the picture side information feature comprises:

decoding a first specified quantity of channel data in the picture bitstream to obtain second decoded data, and obtaining a third preview picture based on the picture side information feature and the second decoded data; and decoding a second specified quantity of channel data in the picture bitstream to obtain third decoded data, and obtaining a fourth preview picture based on the picture side information feature and the third decoded data, wherein the second specified quantity is greater than the first specified quantity, and the second specified quantity of channel data comprises the first specified quantity of channel data.

7. The method according to any one of claims 1 to 6, further comprising:
in response to an operation of tapping the preview picture by a user, obtaining, based on the picture bitstream, a reconstructed picture corresponding to the to-be-decoded picture.

8. The method according to any one of claims 1 to 6, wherein the obtaining a preview picture based on the picture side information feature comprises:
obtaining an average value of data in the picture feature based on the picture side information feature, and obtaining the preview picture based on the average value of the data in the picture feature.

9. The method according to claim 2, wherein the obtaining at least a part of picture features based on the picture bitstream comprises:

determining, based on the picture side information feature, a probability corresponding to each piece of data in the picture feature; and
obtaining the at least a part of picture features based on the picture bitstream and the probability corresponding to each piece of data in the picture feature.

10. A picture encoding method, comprising:

obtaining a to-be-encoded picture;
obtaining a first picture feature set of the to-be-encoded picture;
obtaining a side information feature of the to-be-encoded picture based on the first picture feature set of the to-be-encoded picture, wherein the side information feature is a second picture feature set obtained by performing feature extraction on the first picture feature set based on a hyperprior encoding neural network, a data volume of the second picture feature set is less than a data volume of the first picture feature set, the hyperprior encoding neural network is obtained through training constraint based on a bit rate loss, a reconstructed picture distortion loss, and a preview picture distortion loss, and the preview picture distortion loss represents a similarity difference between an original training picture and a preview picture of the original training picture; and
obtaining a picture bitstream based on the side information feature and the first picture feature set of the to-be-encoded picture, and obtaining a side information bitstream based on the side information feature of the to-be-encoded picture, wherein the side information bitstream is used by a decoder side to obtain a preview picture of the to-be-encoded picture.

11. The method according to claim 10, wherein the obtaining a picture bitstream based on the side information feature and a picture feature of the to-be-encoded picture comprises:

obtaining distribution information of each piece of data in the first picture feature set based on the side information feature of the to-be-encoded picture; and

encoding the picture feature based on the distribution information of each piece of data in the first picture feature set, to obtain the picture bitstream.

12. The method according to claim 11, wherein the obtaining a side information bitstream based on the side information feature of the to-be-encoded picture comprises:

estimating a probability of each piece of data in the side information feature based on preset distribution information, to obtain the probability of each piece of data in the side information feature; and

encoding the side information feature based on the probability of each piece of data in the side information feature, to obtain the side information bitstream.

13. A picture decoding method, comprising:

obtaining a side information bitstream of a to-be-decoded picture;

obtaining a picture side information feature based on the side information bitstream, wherein the picture side information feature is a second picture feature set obtained by performing, based on a hyperprior encoding neural network, feature extraction on a first picture feature set corresponding to the to-be-decoded picture, a data volume of the second picture feature set is less than a data volume of the first picture feature set, the hyperprior encoding neural network is obtained through training constraint based on a bit rate loss, a reconstructed picture distortion loss, and a preview picture distortion loss, and the preview picture distortion loss represents a similarity difference between an original training picture and a preview picture of the original training picture;

obtaining a picture bitstream of the to-be-decoded picture, wherein the picture bitstream comprises data of a plurality of channels of the to-be-decoded picture;

decoding a first specified quantity of channel data in the picture bitstream to obtain first decoded data;

obtaining a first reconstructed picture based on the picture side information feature and the first decoded data;

decoding a second specified quantity of channel data in the picture bitstream to obtain second decoded data; and

obtaining a second reconstructed picture based on the picture side information feature and the second decoded data.

14. The method according to claim 13, further comprising: decoding all channel data in the picture bitstream to obtain third decoded data, and obtaining a third reconstructed picture based on the side information feature and the third decoded data.

15. The method according to claim 13, comprising:

after the first reconstructed picture is obtained, sending the first reconstructed picture to a display for display; and

after the second reconstructed picture is obtained, sending the second reconstructed picture to the display for display, to cover the first reconstructed picture.

16. A picture decoding apparatus, comprising:

an obtaining module, configured to obtain a side information bitstream of a to-be-decoded picture, wherein

the obtaining module is configured to obtain a picture side information feature based on the side information bitstream, wherein the picture side information feature is a second picture feature set obtained by performing, based on a hyperprior encoding neural network, feature extraction on a first picture feature set corresponding to the to-be-decoded picture, a data volume of the second picture feature set is less than a data volume of the first picture feature set, and during training of the hyperprior encoding neural network, training constraint is performed based on a bit rate loss, a reconstructed picture distortion loss, and a preview picture distortion loss; and

a pre-decoding module, configured to obtain a preview picture of the to-be-decoded picture based on the picture side information feature.

17. The apparatus according to claim 16, wherein the obtaining module is further configured to: obtain a picture bitstream of the to-be-decoded picture, wherein the picture bitstream comprises data of a plurality of channels of the to-be-decoded picture; and

obtain first decoded data based on the picture bitstream, wherein the first decoded data is at least a part of picture features in the first picture feature set.

18. The apparatus according to claim 17, wherein the obtaining module comprises a hyperprior decoding module and an entropy decoding module;

the hyperprior decoding module is configured to determine an average value and a variance of data in the first picture feature set based on the picture side information feature;

the entropy decoding module is configured to determine, based on the average value and the variance of the data in the first picture feature set, a probability corresponding to each piece of data in the picture feature; and
the entropy decoding module is configured to obtain the first decoded data based on the picture bitstream and a probability corresponding to each piece of data in the first picture feature set.

19. The apparatus according to claim 18, wherein the obtaining module further comprises a hyperprior entropy estimation module;

the hyperprior entropy estimation module is configured to obtain, based on the side information bitstream, a probability corresponding to each piece of data in the picture side information feature; and
the entropy decoding module is configured to decode the side information bitstream based on the probability corresponding to each piece of data in the picture side information feature, to obtain the picture side information feature.

20. The apparatus according to any one of claims 17 to 19, wherein the pre-decoding module is configured to: obtain a first preview picture based on the picture side information feature; or obtain a second preview picture based on the picture side information feature and the first decoded data; and
a similarity between the second preview picture and the to-be-decoded picture is greater than a similarity between the first preview picture and the to-be-decoded picture.

21. The apparatus according to any one of claims 16 to 19, wherein the pre-decoding module is a pre-decoding network, and the pre-decoding network comprises a picture scaling operator; or
the pre-decoding network is capable of obtaining a preview picture with a specified size.

22. A picture encoding apparatus, comprising:

a feature extraction module, configured to: obtain a to-be-encoded picture, and obtain a first picture feature set of the to-be-encoded picture;
a hyperprior encoding module, configured to obtain a side information feature of the to-be-encoded picture based on the first picture feature set of the to-be-encoded picture, wherein the side information feature is a second picture feature set obtained by performing feature extraction on the first picture feature set based on the hyperprior encoding module, a data volume of the second picture feature set is less than a data volume of the first picture feature set, the hyperprior encoding module is obtained through training constraint based on a bit rate loss, a reconstructed picture distortion loss, and a preview picture distortion loss, and the preview picture distortion loss represents a similarity difference between an original training picture and a preview picture of the original training picture; and
a feature encoding module, configured to: obtain a picture bitstream based on the side information feature and the first picture feature set of the to-be-encoded picture, and obtain a side information bitstream based on the side information feature of the to-be-encoded picture.

23. The apparatus according to claim 22, wherein the feature encoding module comprises a hyperprior decoding module and an entropy encoding module;

the hyperprior decoding module is configured to obtain an average value and a variance of data in the first picture feature set based on the side information feature of the to-be-encoded picture; and
the entropy encoding module is configured to perform entropy encoding on the first picture feature set based on the average value and the variance of the data in the picture feature, to obtain the picture bitstream.

24. The apparatus according to claim 23, wherein the feature encoding module comprises a hyperprior entropy estimation module;

the hyperprior entropy estimation module is configured to estimate a probability of each piece of data in the side information feature based on preset distribution information, to obtain the probability of each piece of data in the side information feature; and
the entropy encoding module is configured to encode the side information feature based on the probability of each piece of data in the side information feature, to obtain the side information bitstream.

25. A picture decoding apparatus, comprising:

an obtaining module, configured to obtain a side information bitstream of a to-be-decoded picture, wherein
the obtaining module is configured to obtain a picture side information feature based on the side information bitstream, wherein the picture side information feature is a second picture feature set obtained by performing, based on a hyperprior encoding neural network, feature extraction on a first picture feature set corresponding to the to-be-decoded picture, a data volume of the second picture feature set is less than a data volume of the first picture feature set, the hyperprior encoding neural network is obtained through training constraint based on a bit rate loss, a reconstructed picture distortion loss, and a preview picture distortion loss, and the preview picture distortion loss represents a similarity difference between an original training picture and a preview picture of the original training picture;

the obtaining module is configured to obtain a picture bitstream of the to-be-decoded picture, wherein the picture bitstream comprises data of a plurality of channels of the to-be-decoded picture; and

the obtaining module is configured to decode a first specified quantity of channel data in the picture bitstream to obtain first decoded data; and

a decoding module, configured to obtain a first reconstructed picture based on the picture side information feature and the first decoded data, wherein

the obtaining module is configured to decode a second specified quantity of channel data in the picture bitstream to obtain second decoded data; and

the decoding module is configured to obtain a second reconstructed picture based on the picture side information feature and the second decoded data.

26. The apparatus according to claim 25, wherein the decoding module is configured to: after all channel data in the picture bitstream is decoded to obtain third decoded data, obtain a third reconstructed picture based on the side information feature and the third decoded data.

27. The apparatus according to claim 25, wherein

the decoding module is configured to: after the first reconstructed picture is obtained, send the first reconstructed picture to a display for display; and

the decoding module is configured to: after the second reconstructed picture is obtained, send the second reconstructed picture to the display for display, to cover the first reconstructed picture.

28. An electronic device, comprising the picture decoding apparatus according to any one of claims 16 to 21 and/or the picture encoding apparatus according to any one of claims 22 to 24 and/or the picture decoding apparatus according to any one of claims 25 to 27.

29. A coding apparatus, wherein the coding apparatus is an encoding apparatus or a decoding apparatus, and the coding apparatus comprises: one or more processors and a memory, wherein the memory is configured to store program instructions, and when the program instructions are executed by the one or more processors, the picture decoding method according to any one of claims 1 to 9, the picture encoding method according to any one of claims 10 to 12, or the picture decoding method according to any one of claims 13 to 14 is implemented.

30. A readable storage medium, wherein the readable medium stores instructions, and when the instructions are executed on an electronic device, the electronic device is enabled to perform the picture decoding method according to any one of claims 1 to 9, the picture encoding method according to any one of claims 10 to 12, or the picture decoding method according to any one of claims 13 to 15.

31. A computer program product, comprising instructions, wherein when the instructions are executed on an electronic device, the electronic device is enabled to perform the picture decoding method according to any one of claims 1 to 9, the picture encoding method according to any one of claims 10 to 12, or the picture decoding method according to any one of claims 13 to 15.

32. A computer-readable storage medium, wherein the computer-readable storage medium stores a picture bitstream and a side information bitstream obtained in the encoding method according to any one of claims 10 to 12 that is performed by one or more processors.

33. A decoding apparatus, comprising a memory and a decoder, wherein

the memory is configured to store a picture bitstream and a side information bitstream; and

the decoder is configured to perform the picture decoding method according to any one of claims 1 to 9 or claims 13 to 15.

34. An artificial intelligence neural network coding architecture, comprising a coding network and a hyperprior coding network, wherein the coding network comprises an encoding neural network, a first entropy encoder, a first entropy decoder, and a decoding neural network, and the hyperprior coding network comprises a hyperprior encoding neural network, a second entropy encoder, a second entropy decoder, and a pre-decoding neural network;

a to-be-encoded picture is processed by using the encoding neural network, to obtain a first picture feature set of the to-be-encoded picture;
feature extraction is performed on the first picture feature set by using the hyperprior encoding neural network, to obtain a side information feature;

entropy encoding is performed on the first picture feature set by using the first entropy encoder, to obtain a picture bitstream;

entropy encoding is performed on the side information feature by using the second entropy encoder, to obtain a side information bitstream;

entropy decoding is performed on the side information bitstream by using the second entropy decoder, to obtain a decoded side information feature;

the decoded side information feature is processed by using the pre-decoding neural network, to obtain a preview picture of the to-be-encoded picture;

entropy decoding is performed on the picture bitstream by using the first entropy decoder, to obtain an entropy decoding result corresponding to the picture bitstream; and

the entropy decoding result corresponding to the picture bitstream is processed by using the decoding neural network, to obtain a reconstructed picture of the to-be-encoded picture.

Encoder side

Decoder side

Reconstructed picture     Thumbnail

FIG. 1

FIG. 2

Encoder side

Storage/
Transmission

Iterative bitstream 1 → Iterative bitstream 2 → Iterative bitstream 3 → Decoder side

Decoder side

Iterative bitstream 1 →  Picture 1 --- Iterative bitstream 2 → Picture 2 --- Iterative bitstream 2 → Picture 3

Picture 1

Picture 2

Picture 3

FIG. 3

Encoder side

Storage/
Transmission

Thumbnail
bitstream

Picture bitstream

Decoder side

Decoder side

Thumbnail
bitstream

Picture
bitstream

Thumbnail

Reconstructed picture

FIG. 4

Encoder side

Feature extraction → Picture feature → Feature extraction → Side information feature

Encoding

Encoding

Picture feature → Encoding → Picture bitstream

Side information feature → Encoding → Side information bitstream

Storage/ Transmission → Decoder side

EP 4 529 167 A1

Decoder side

Side information bitstream → Decoding → Side information feature → Reconstruction →

Preview picture

FIG. 5a

Encoder side

FIG. 5b

Feature
extraction

Feature
extraction

Picture feature

Side information
feature

Encoding

Encoding

Storage/
Transmission

Picture bitstream

Side information
bitstream

Decoder side

Side information
bitstream

Decoding

Side information
feature

Picture bitstream

Decoding

First part of picture
features

Reconstruction

Preview picture 1

Side information
bitstream

Decoding

Side information
feature

Picture bitstream

Decoding

First part of picture
features and second
part of picture features

Reconstruction

Preview picture 2

FIG. 5c

EP 4 529 167 A1

Encoding apparatus

AI encoding unit

| Feature extraction module | Hyperprior encoding module | Hyperprior entropy estimation module | Hyperprior decoding module |

Entropy encoding module

Decoding apparatus

AI decoding unit

Hyperprior decoding module

Hyperprior entropy estimation module

Pre-decoding module

Decoding module

Entropy decoding module

Storage module

Loading module

FIG. 6

FIG. 7

FIG. 8

EP 4 529 167 A1

FIG. 9

Encoding

Camera → Original picture

Encoding → AI encoding unit → Entropy encoding module → Storage module → Bitstream file

Decoding

Preview picture ← AI decoding unit ← Entropy decoding module ← Loading module ← Bitstream file

FIG. 10

EP 4 529 167 A1

Device side | Cloud side

Original picture

JPEG encoding module → JPEG decoding module → AI encoding unit → Entropy encoding module → Storage module → Bitstream file

Preview picture

JPEG decoding module ← JPEG encoding module ← AI encoding unit ← Entropy decoding module ← Loading module

FIG. 11

EP 4 529 167 A1

Obtain a to-be-encoded picture — 1201

Obtain a picture feature of the to-be-encoded picture — 1202

Obtain a side information feature of the to-be-encoded picture based on the picture feature of the to-be-encoded picture — 1203

Obtain a picture bitstream based on the side information feature and the picture feature of the to-be-encoded picture, and obtain a side information bitstream based on the side information feature of the to-be-encoded picture — 1204

FIG. 12

Obtain a side information bitstream of a to-be-decoded picture — 1301

Obtain a picture side information feature based on the side information bitstream — 1302

Obtain a preview picture based on the picture side information feature — 1303

FIG. 13

FIG. 14a

FIG. 14b

Obtain a side information bitstream and a picture bitstream of a to-be-decoded picture — 1501

Obtain a picture side information feature based on the side information bitstream, and obtain at least a part of picture features based on the picture bitstream — 1502

Obtain a preview picture based on the picture side information feature and the at least a part of picture features — 1503

FIG. 15

FIG. 16a

FIG. 16b

Obtain a side information bitstream and a picture bitstream of a to-be-decoded picture ⌐ 1701

Obtain a picture side information feature based on the side information bitstream ⌐ 1702

When a quantity of channels in a decoded picture bitstream reaches a first specified quantity, obtain a first preview picture based on the picture side information feature and decoded data corresponding to a first specified quantity of channel data ⌐ 1703

When a quantity of decoded channels reaches a second specified quantity, obtain a second preview picture based on the picture side information feature and decoded data corresponding to a second specified quantity of channel data ⌐ 1704

FIG. 17

```
┌──────────────────────────────────────────────────────────────────┐
│ Obtain a side information bitstream and a picture bitstream of a   │      1801
│ to-be-decoded picture                                              │
└──────────────────────────────────────────────────────────────────┘
                                 │
                                 ▼
┌──────────────────────────────────────────────────────────────────┐
│ Obtain a picture side information feature based on the side        │      1802
│ information bitstream                                              │
└──────────────────────────────────────────────────────────────────┘
                                 │
                                 ▼
┌──────────────────────────────────────────────────────────────────┐
│ When a quantity of channels in a decoded picture bitstream reaches │
│ a first specified quantity, obtain a first reconstructed picture   │      1803
│ based on the picture side information feature and decoded data     │
│ corresponding to a first specified quantity of channel data        │
└──────────────────────────────────────────────────────────────────┘
                                 │
                                 ▼
┌──────────────────────────────────────────────────────────────────┐
│ When a quantity of decoded channels reaches a second specified     │      1804
│ quantity, obtain a second reconstructed picture based on the       │
│ picture side information feature and decoded data corresponding to  │
│ a second specified quantity of channel data                        │
└──────────────────────────────────────────────────────────────────┘
```

FIG. 18

FIG. 19

10

| Wireless communication module 120 | Mobile communication module 130 |
|---|---|

| Power module 140 | | Audio module 150 |
|---|---|---|

| Interface module 160 | Processor 110 | Camera 170 |
|---|---|---|

| Memory 180 | | Sensor module 190 |
|---|---|---|

| Button 101 | | Display 102 |
|---|---|---|

FIG. 20

FIG. 21

EP 4 529 167 A1

Local | Cloud side

Upload

Input → **JPEG encoding module CPU** → **JPEG decoding module CPU** → **AI encoding unit GPU** → **Entropy encoding module CPU** → **Storage module CPU** → **Bitstream file**

Compression

Decompression

Download

Output ← **JPEG decoding module CPU** ← **JPEG encoding module CPU** ← **AI encoding unit GPU** ← **Entropy decoding module CPU** ← **Loading module CPU** ← Bitstream file

FIG. 22

## INTERNATIONAL SEARCH REPORT

| International application No. |
|---|
| **PCT/CN2023/100783** |

**A.    CLASSIFICATION OF SUBJECT MATTER**

H04N19/20(2014.01)i

According to International Patent Classification (IPC) or to both national classification and IPC

**B.    FIELDS SEARCHED**

Minimum documentation searched (classification system followed by classification symbols)

IPC:  H04N

Documentation searched other than minimum documentation to the extent that such documents are included in the fields searched

Electronic data base consulted during the international search (name of data base and, where practicable, search terms used)

CNTXT; ENTXT; ENTXTC; VEN; CJFD; CNKI; JVET: 视频, 图像, 编码, 解码, 边信息, 超先验, 预览, 缩略, 概况, 渐进, 逐步, 逐渐, 神经网络, 深度, 学习, 特征, 熵, video, image, encod+, decod+, side, information, hyper, prior, hyperprior+, preview+, thumb+, gradua+, neural, network, deep+, learn+, feature, entropy

**C.    DOCUMENTS CONSIDERED TO BE RELEVANT**

| Category* | Citation of document, with indication, where appropriate, of the relevant passages | Relevant to claim No. |
|---|---|---|
| A | CN 113747163 A (SHANGHAI JIAO TONG UNIVERSITY) 03 December 2021 (2021-12-03)<br>    description, paragraphs [0059]-[0173] | 1-34 |
| A | CN 114386595 A (SOUTHWEST JIAOTONG UNIVERSITY) 22 April 2022 (2022-04-22)<br>    entire document | 1-34 |
| A | CN 114581542 A (BEIJING SENSETIME SCIENCE TECH LTD.) 03 June 2022 (2022-06-03)<br>    entire document | 1-34 |
| A | CN 114501012 A (ZHEJIANG DAHUA TECHNOLOGY CO., LTD.) 13 May 2022 (2022-05-13)<br>    entire document | 1-34 |
| A | WO 2022106013 A1 (HUAWEI TECHNOLOGIES CO., LTD. et al.) 27 May 2022 (2022-05-27)<br>    entire document | 1-34 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **22 August 2023** | **07 September 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

<table>
<tr><td colspan="2">**INTERNATIONAL SEARCH REPORT**</td><td>International application No.<br>**PCT/CN2023/100783**</td></tr>
</table>

**C.     DOCUMENTS CONSIDERED TO BE RELEVANT**

| Category* | Citation of document, with indication, where appropriate, of the relevant passages | Relevant to claim No. |
|---|---|---|
| A | US 2015085920 A1 (MITSUBISHI ELECTRIC RESEARCH LABORATORIES, INC.) 26 March 2015 (2015-03-26)<br>entire document | 1-34 |
| A | US 2022174328 A1 (GOOGLE LLC) 02 June 2022 (2022-06-02)<br>entire document | 1-34 |

Form PCT/ISA/210 (second sheet) (July 2022)

INTERNATIONAL SEARCH REPORT
Information on patent family members

International application No.

**PCT/CN2023/100783**

| Patent document cited in search report | | | Publication date (day/month/year) | Patent family member(s) | | | Publication date (day/month/year) |
|---|---|---|---|---|---|---|---|
| CN | 113747163 | A | 03 December 2021 | None | | | |
| CN | 114386595 | A | 22 April 2022 | None | | | |
| CN | 114581542 | A | 03 June 2022 | None | | | |
| CN | 114501012 | A | 13 May 2022 | None | | | |
| WO | 2022106013 | A1 | 27 May 2022 | EP | 4193601 | A1 | 14 June 2023 |
| | | | | TW | 202228440 | A | 16 July 2022 |
| US | 2015085920 | A1 | 26 March 2015 | JP | 2015065644 | A | 09 April 2015 |
| | | | | JP | 6210948 | B2 | 11 October 2017 |
| | | | | US | 9014499 | B2 | 21 April 2015 |
| US | 2022174328 | A1 | 02 June 2022 | None | | | |

Form PCT/ISA/210 (patent family annex) (July 2022)

**REFERENCES CITED IN THE DESCRIPTION**

**Patent documents cited in the description**

- CN 202210699545